# EUROPEAN PATENT APPLICATION

(11) **EP 4 336 212 A1**
(43) Date of publication of application: **13.03.2024**
(21) Application number: 23196409.9
(22) Date of filing: 08.09.2023
(51) Int. Cl.: G01S 7/481, G01S 17/00, G01S 7/48, G01S 7/497

(54) **TEMPORALLY MODULATED LIGHT EMISSION FOR DEFECT DETECTION IN LIGHT DETECTION AND RANGING (LIDAR) DEVICES AND CAMERAS**

(30) Priority: 08.09.2022 US 202217930441
(71) Applicant: Waymo LLC, Mountain View, CA 94043 (US)
(72) Inventor: SHEPARD, Ralph H, Mountain View, CA 94043 (US); WONG, Andy, Mountain View, CA 94043 (US); SALSBURY, Chase, Mountain View, CA 94043 (US); KLEIN, Regan, Mountain View, CA 94043 (US)
(74) Representative: Chettle, John Edward

(57) **Abstract**

Example embodiments relate to temporally modulated light emission and defect detection in light detection and ranging (lidar) devices and cameras. An example embodiment includes a method. The method includes detecting, by a first detector via an optical component, a background signal corresponding to a surrounding environment. The method also includes illuminating, by a first light source, a first portion of the optical component with a first light signal. Additionally, the method includes detecting, by the first detector when one or more defects are present in a body of the first portion of the optical component or on a surface of the first portion of the optical component, the first light signal. Further, the method includes determining, by a computing device, when one or more defects are present in the body of the first portion of the optical component or on the surface of the first portion of the optical component.

## Description

### BACKGROUND

Unless otherwise indicated herein, the description in this section is not prior art to the claims in this application and is not admitted to be prior art by inclusion in this section.

Light detection and ranging (lidar) devices may estimate distances to objects in a surrounding environment by emitting light pulses into the surrounding environment and determining a respective time of flight for each light pulse. The time of flight of each light pulse can be used to estimate distances to reflective objects in the surrounding environment and/or to create a three-dimensional point cloud indicative of reflective objects in the surrounding environment. Additionally, cameras may be used to capture images of one or more objects in a surrounding environment. Such images may be used in object detection and avoidance procedures (e.g., within a vehicle operating in an autonomous or semi-autonomous mode). However, defects along one or more optical paths of lidar devices and/or cameras can lead to erroneous detections (e.g., erroneous point clouds, or blurry and/or obscured images).

### SUMMARY

Example embodiments described herein include detectors that are used to detect the presence of one or more defects on or in an optical component of a lidar device or of a camera. For example, a lidar device or camera may include a lens and/or optical window used in detecting a surrounding environment. The lens and/or optical window may experience one or more defects (e.g., internal cracks, exterior debris, or exterior condensation) from time to time. In order to detect defects, embodiments described herein may include using a light source to illuminate part or all of the optical window. The illumination from the light source may include a structured illumination or a wavelength-specific illumination. Further, the illumination may be varied over time (e.g., based on a modulation frequency). Using the characteristics of the illumination, the background signal (e.g., corresponding to the desired detection of the surrounding environment) can be disambiguated from the signal corresponding to the defect. Upon identifying the defects, one or more remedial actions may be undertaken (e.g., cleaning the optical component, replacing the optical component, or eliminating the effects of the defect in post-processing).

In a first aspect, a method is provided. The method includes detecting, by a first detector via an optical component, a background signal corresponding to a surrounding environment. The method also includes illuminating, by a first light source, a first portion of the optical component with a first light signal that is modulated according to a first modulation frequency. A sensing device is configured to detect objects in the surrounding environment via the optical component. Additionally, the method includes detecting, by the first detector when one or more defects are present in a body of the first portion of the optical component or on a surface of the first portion of the optical component, the first light signal. Further, the method includes determining, by a computing device, when one or more defects are present in the body of the first portion of the optical component or on the surface of the first portion of the optical component based on the detected background signal and the detected first light signal. Determining when one or more defects are present in the body of the first portion of the optical component or on the surface of the first portion of the optical component based on the detected background signal and the detected first light signal includes disambiguating the detected background signal from the detected first light signal based on the first modulation frequency.

In a second aspect, a system is provided. The system includes an optical component. The system also includes a sensing device configured to detect objects in a surrounding environment via the optical component. Additionally, the system includes a first light source configured to illuminate a first portion of the optical component with a first light signal that is modulated according to a first modulation frequency. Further, the system includes a first detector. The first detector is configured to detect, via the optical component, a background signal corresponding to the surrounding environment. The first detector is also configured to detect, when one or more defects are present in a body of the first portion of the optical component or on a surface of the first portion of the optical component, the first light signal. In addition, the system includes a computing device configured to determine when one or more defects are present in the body of the first portion of the optical component or on the surface of the first portion of the optical component based on the detected background signal and the detected first light signal. Determining when one or more defects are present in the body of the first portion of the optical component or on the surface of the first portion of the optical component based on the detected background signal and the detected first light signal includes disambiguating the detected background signal from the detected first light signal based on the first modulation frequency.

In a third aspect, a computing device is provided. The computing device is configured to determine when one or more defects are present in a body of a first portion of an optical component or on a surface of the first portion of the optical component based on a detected background signal and a detected first light signal. Determining when one or more defects are present in the body of the first portion of the optical component or on the surface of the first portion of the optical component based on the detected background signal and the detected first light signal includes disambiguating the detected background signal from the detected first light signal based on a first modulation frequency. The detected background signal corresponds to a surrounding environment and was detected by a first detector via the optical component. A sensing device is configured to detect objects in the surrounding environment via the optical component. The first portion of the optical component was illuminated by the first light signal by a first light source. The first light signal was modulated according to the first modulation frequency. The first light signal was detected by the first detector when one or more defects were present in the body of the first portion of the optical component or on the surface of the first portion of the optical component

These as well as other aspects, advantages, and alternatives will become apparent to those of ordinary skill in the art by reading the following detailed description, with reference, where appropriate, to the accompanying drawings.

### BRIEF DESCRIPTION OF THE DRAWINGS

Figure 1 is a functional block diagram illustrating a vehicle, according to example embodiments.
Figure 2A is an illustration of a physical configuration of a vehicle, according to example embodiments.
Figure 2B is an illustration of a physical configuration of a vehicle, according to example embodiments.
Figure 2C is an illustration of a physical configuration of a vehicle, according to example embodiments.
Figure 2D is an illustration of a physical configuration of a vehicle, according to example embodiments.
Figure 2E is an illustration of a physical configuration of a vehicle, according to example embodiments.
Figure 2F is an illustration of a physical configuration of a vehicle, according to example embodiments.
Figure 2G is an illustration of a physical configuration of a vehicle, according to example embodiments.
Figure 2H is an illustration of a physical configuration of a vehicle, according to example embodiments.
Figure 2I is an illustration of a physical configuration of a vehicle, according to example embodiments.
Figure 2J is an illustration of a field of view for various sensors, according to example embodiments.
Figure 2K is an illustration of beam steering for a sensor, according to example embodiments.
Figure 3 is a conceptual illustration of wireless communication between various computing systems related to an autonomous or semi-autonomous vehicle, according to example embodiments.
Figure 4A is a block diagram of a system including a lidar device, according to example embodiments.
Figure 4B is a block diagram of a lidar device, according to example embodiments.
Figure 5A is an illustration of a system having one or more defects present, according to example embodiments.
Figure 5B is an illustration of a system having one or more defects present, according to example embodiments.
Figure 6A is an illustration of a lidar device that includes defect-detection components, according to example embodiments.
Figure 6B is an illustration of a lidar device that includes defect-detection components, according to example embodiments.
Figure 7A is an illustration of a camera that includes defect-detection components, according to example embodiments.
Figure 7B is an illustration of a camera that includes defect-detection components, according to example embodiments.
Figure 8A is an illustration of a hybrid camera / defect-detection system, according to example embodiments.
Figure 8B is an illustration of a hybrid camera / defect-detection system, according to example embodiments.
Figure 9A is an illustration of a hybrid camera / defect-detection system, according to example embodiments.
Figure 9B is an illustration of a hybrid camera / defect-detection system, according to example embodiments.
Figure 10A is an illustration of an illumination pattern, according to example embodiments.
Figure 10B is an illustration of an illumination pattern, according to example embodiments.
Figure 10C is an illustration of an illumination pattern, according to example embodiments.
Figure 10D is an illustration of an illumination pattern, according to example embodiments.
Figure 11A illustrates a sequence of images captured using a camera that includes defect-detection components when one or more defects are not present, according to example embodiments.
Figure 11B illustrates a sequence of images captured using a camera that includes defect-detection components when one or more defects are present, according to example embodiments.
Figure 11C illustrates a sequence of images captured using a camera that includes defect-detection components when one or more defects are not present, according to example embodiments.
Figure 11D illustrates a sequence of images captured using a camera that includes defect-detection components when one or more defects are present, according to example embodiments.
Figure 12 is a flowchart illustration of a method, according to example embodiments.

### DETAILED DESCRIPTION

Example methods and systems are contemplated herein. Any example embodiment or feature described herein is not necessarily to be construed as preferred or advantageous over other embodiments or features. Further, the example embodiments described herein are not meant to be limiting. It will be readily understood that certain aspects of the disclosed systems and methods can be arranged and combined in a wide variety of different configurations, all of which are contemplated herein. In addition, the particular arrangements shown in the figures should not be viewed as limiting. It should be understood that other embodiments might include more or less of each element shown in a given figure. Additionally, some of the illustrated elements may be combined or omitted. Yet further, an example embodiment may include elements that are not illustrated in the figures.

Lidar devices as described herein can include one or more light emitters and one or more detectors used for detecting light that is emitted by the one or more light emitters and reflected by one or more objects in an environment surrounding the lidar device. As an example, the surrounding environment could include an interior or exterior environment, such as an inside of a building or an outside of a building. Additionally or alternatively, the surrounding environment could include an interior of a vehicle. Still further, the surrounding environment could include a vicinity around and/or on a roadway. Examples of objects in the surrounding environment include, but are not limited to, other vehicles, traffic signs, pedestrians, bicyclists, roadway surfaces, buildings, terrain, etc. Additionally, the one or more light emitters could emit light into a local environment of the lidar itself. For example, light emitted from the one or more light emitters could interact with a housing of the lidar and/or surfaces or structures coupled to the lidar. In some cases, the lidar could be mounted to a vehicle, in which case the one or more light emitters could be configured to emit light that interacts with objects within a vicinity of the vehicle. Further, the light emitters could include optical fiber amplifiers, laser diodes, light-emitting diodes (LEDs), among other possibilities.

Lidar devices and/or cameras may be used to sense a surrounding environment. For example, a lidar device may be used to generate a point cloud associated with an environment surrounding an autonomous vehicle, and that point cloud may be used by the autonomous vehicle for object detection and avoidance. Such lidar devices and/or cameras may include one or more optical components. For example, a lidar device and/or a camera may include an optical window, a mirror, a lens, etc.

Sometimes, captured images / generated point clouds can be adversely affected as a result of one or more defects on or in optical components within a camera or a lidar device. For example, a scratch, a crack, a smudge, a deformation, an air bubble, an impurity, a degradation, a discoloration, an imperfect transparency, a warping, condensation, dirt, dust, mud, leaves, rain, snow, sleet, hail, ice, insect residue, etc. may cause light from a scene to be directed to unintended / improper regions of an image sensor / light detector, may prevent light from a scene from ever reaching an image sensor / light detector, may result in undesirable crosstalk, or may otherwise modify light from a scene (e.g., modify polarization or wavelength) prior to the light reaching an image sensor / light detector. Such defects can result in improper object identification / distance detection or a lack of a reflected signal altogether. In autonomous vehicle applications, improper object identification / distance detection can result in transportation slowdowns or even collisions.

To detect such defects (and possibly thereafter take a remedial action), the devices disclosed herein may include an additional detector (e.g., an additional camera, sometimes called an "defect-detection camera") used to capture images of one or more of the optical components of the lidar device / camera being used to sense the surrounding environment. Images captured by the defect-detection camera may be analyzed to determine whether one or more defects are present on a given optical component, the location of one or more defects on a given optical component, the size of one or more defects on a given optical component, and/or the type of one or more defects on a given optical component. Further, the defect-detection camera may be positioned adjacent to one or more detectors associated with the lidar device / camera that is being used to collect data about the surrounding environment. Additionally or alternatively, instead of using a dedicated defect-detection camera, the devices disclosed herein may utilize the sensing device (e.g., detector) already present within a detection system to identify defects. For example, if an image sensor (e.g., of a camera) is being used to identify objects in a surrounding environment, that image sensor may also be used to capture images that can be used to identify defects in the optical components of the camera. Images for defect detection may be captured sequentially or simultaneously with (e.g., as a portion of) images used for object detection, for example. Alternatively, one or more images may be used for both object detection (e.g., within a first portion of the image) and defect detection (e.g., within a second portion of the image).

In some embodiments, images captured by the defect-detection camera may be susceptible to and/or adversely affected by background light (e.g., glare). For example, if the sun is present in an image captured by the defect-detection camera, it may be difficult to use that image to detect defects associated with an optical component. This is especially true when the defect-detection camera has a low dynamic range (e.g., low relative to the dynamic range of intensities present in the surrounding scene).

Embodiments described herein mitigate the effect of background light on the images captured by a detector used for defect detection (e.g., a standalone defect-detection camera or a hybrid object-detection / defect-detection camera) by illuminating the one or more optical components being monitored using a temporally modulated light sequence. The temporally modulated light sequence may include wavelength modulation and/or spatial modulation. The temporally modulated light sequence may be provided by one or more light sources (e.g., LEDs) positioned near the image sensor of the defect-detection camera. Additionally or alternatively, the illumination may be provided by one or more light sources (e.g., LEDs) positioned adjacent to the one or more optical components being monitored. For example, one or more light sources may be arranged to provide a light signal that propagates within an optical component (e.g., lens) via total internal reflection unless / until the light signal encounters a defect, in which case the light signal is coupled out of the optical component and directed toward the defect-detection camera.

Regardless of where the light source(s) are positioned, the modulated light sequence may be modulated according to a specific scheme (e.g., an encoding) in order to highlight any defects relative to the background. Because the defect(s) may be highlighted relative to the background according to the modulation scheme, a filter can later be applied to a series of images (e.g., a video) captured by the defect-detection camera in order to separate (e.g., disambiguate) the defect(s) from the background within the series of images, thereby making the defect(s) more readily identifiable.

The modulation scheme may modulate the light in time and/or in space. For example, a series of structured illuminations may be used to highlight the optical imperfection(s) against a relatively uniform background. In one embodiment, for instance, at a first time step, a modulation scheme that illuminates a series of striped regions along the optical component. Thereafter, at a second time step, the modulation scheme may invert the series of striped regions (e.g., such that the regions previously illuminated are now unilluminated and the regions previously unilluminated are now illuminated). Alternatively, a checkerboard pattern could be used. Other structured illumination schemes are also possible. Each of the one or more light sources may correspond to a different illumination region of the optical component(s) being monitored (e.g., a different stripe being illuminated in a given time step). Further, each of the one or more light sources may include one or more optics (e.g., a lens or a coupling optic).

Likewise, the modulation scheme may modulate the light in time and/or in wavelength. For example, a series of illuminations of different wavelengths (e.g., visible and/or infrared wavelengths) may be used to highlight the optical imperfection(s) against a relatively uniform background (e.g., including objects in the surrounding environment that do not change color over time or change color slowly over time). In one embodiment, for instance, a modulation scheme that includes a green illumination of a first duration followed by a blue illumination of a second duration followed by a red illumination of a third duration may be used. Each of the one or more light sources may correspond to a different illumination wavelength. Further, each of the one or more light sources may include one or more optics (e.g., a lens or a filter).

Regardless of which modulation scheme is used, the illumination may be modulated according to a modulation frequency. This modulation frequency may then be used later (e.g., by a computing device analyzing images / video captured by the defect-detection camera) in order to disambiguate which portion(s) of the captured image(s) correspond to the background (e.g., the surrounding environment) and which portion(s), if any, correspond to defect(s). Further, in some embodiments, the type of modulation used can assist in determining a type of defect (e.g., whether the defect is rain or is dust).

The following description and accompanying drawings will elucidate features of various example embodiments. The embodiments provided are by way of example, and are not intended to be limiting. As such, the dimensions of the drawings are not necessarily to scale.

Example systems within the scope of the present disclosure will now be described in greater detail. An example system may be implemented in or may take the form of an automobile. Additionally, an example system may also be implemented in or take the form of various vehicles, such as cars, trucks (e.g., pickup trucks, vans, tractors, or tractor trailers), motorcycles, buses, airplanes, helicopters, drones, lawn mowers, earth movers, boats, submarines, all-terrain vehicles, snowmobiles, aircraft, recreational vehicles, amusement park vehicles, farm equipment or vehicles, construction equipment or vehicles, warehouse equipment or vehicles, factory equipment or vehicles, trams, golf carts, trains, trolleys, sidewalk delivery vehicles, robot devices, etc. Other vehicles are possible as well. Further, in some embodiments, example systems might not include a vehicle.

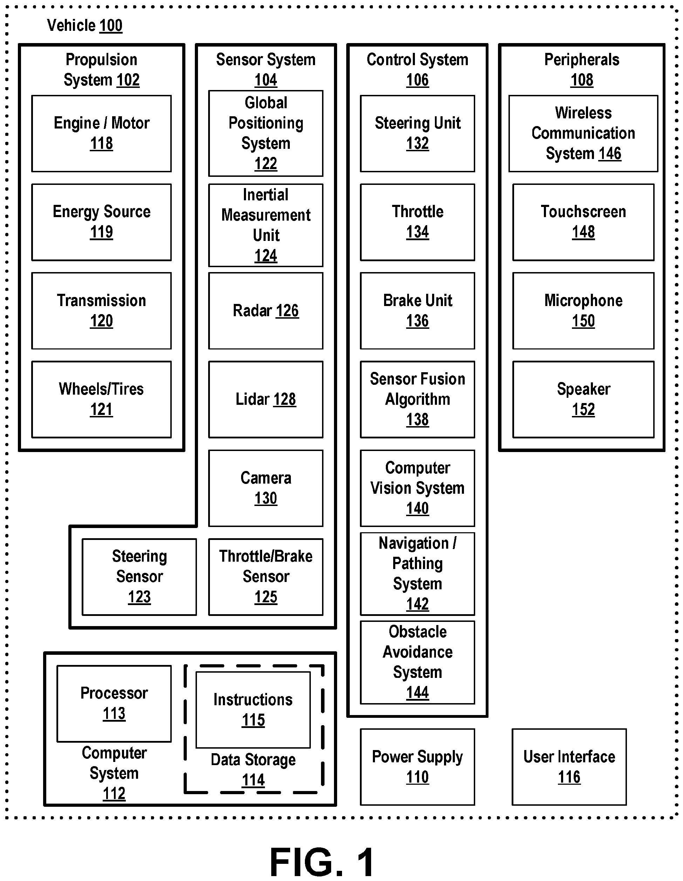

Referring now to the figures, Figure 1 is a functional block diagram illustrating example vehicle 100, which may be configured to operate fully or partially in an autonomous mode. More specifically, vehicle 100 may operate in an autonomous mode without human interaction through receiving control instructions from a computing system. As part of operating in the autonomous mode, vehicle 100 may use sensors to detect and possibly identify objects of the surrounding environment to enable safe navigation. Additionally, example vehicle 100 may operate in a partially autonomous (i.e., semi-autonomous) mode in which some functions of the vehicle 100 are controlled by a human driver of the vehicle 100 and some functions of the vehicle 100 are controlled by the computing system. For example, vehicle 100 may also include subsystems that enable the driver to control operations of vehicle 100 such as steering, acceleration, and braking, while the computing system performs assistive functions such as lane-departure warnings / lane-keeping assist or adaptive cruise control based on other objects (e.g., vehicles) in the surrounding environment.

As described herein, in a partially autonomous driving mode, even though the vehicle assists with one or more driving operations (e.g., steering, braking and/or accelerating to perform lane centering, adaptive cruise control, advanced driver assistance systems (ADAS), or emergency braking), the human driver is expected to be situationally aware of the vehicle's surroundings and supervise the assisted driving operations. Here, even though the vehicle may perform all driving tasks in certain situations, the human driver is expected to be responsible for taking control as needed.

Although, for brevity and conciseness, various systems and methods are described below in conjunction with autonomous vehicles, these or similar systems and methods can be used in various driver assistance systems that do not rise to the level of fully autonomous driving systems (i.e. partially autonomous driving systems). In the United States, the Society of Automotive Engineers (SAE) have defined different levels of automated driving operations to indicate how much, or how little, a vehicle controls the driving, although different organizations, in the United States or in other countries, may categorize the levels differently. More specifically, the disclosed systems and methods can be used in SAE Level 2 driver assistance systems that implement steering, braking, acceleration, lane centering, adaptive cruise control, etc., as well as other driver support. The disclosed systems and methods can be used in SAE Level 3 driving assistance systems capable of autonomous driving under limited (e.g., highway) conditions. Likewise, the disclosed systems and methods can be used in vehicles that use SAE Level 4 self-driving systems that operate autonomously under most regular driving situations and require only occasional attention of the human operator. In all such systems, accurate lane estimation can be performed automatically without a driver input or control (e.g., while the vehicle is in motion) and result in improved reliability of vehicle positioning and navigation and the overall safety of autonomous, semi-autonomous, and other driver assistance systems. As previously noted, in addition to the way in which SAE categorizes levels of automated driving operations, other organizations, in the United States or in other countries, may categorize levels of automated driving operations differently. Without limitation, the disclosed systems and methods herein can be used in driving assistance systems defined by these other organizations' levels of automated driving operations.

As shown in Figure 1, vehicle 100 may include various subsystems, such as propulsion system 102, sensor system 104, control system 106, one or more peripherals 108, power supply 110, computer system 112 (which could also be referred to as a computing system) with data storage 114, and user interface 116. In other examples, vehicle 100 may include more or fewer subsystems, which can each include multiple elements. The subsystems and components of vehicle 100 may be interconnected in various ways. In addition, functions of vehicle 100 described herein can be divided into additional functional or physical components, or combined into fewer functional or physical components within embodiments. For instance, the control system 106 and the computer system 112 may be combined into a single system that operates the vehicle 100 in accordance with various operations.

Propulsion system 102 may include one or more components operable to provide powered motion for vehicle 100 and can include an engine/motor 118, an energy source 119, a transmission 120, and wheels/tires 121, among other possible components. For example, engine/motor 118 may be configured to convert energy source 119 into mechanical energy and can correspond to one or a combination of an internal combustion engine, an electric motor, steam engine, or Stirling engine, among other possible options. For instance, in some embodiments, propulsion system 102 may include multiple types of engines and/or motors, such as a gasoline engine and an electric motor.

Energy source 119 represents a source of energy that may, in full or in part, power one or more systems of vehicle 100 (e.g., engine/motor 118). For instance, energy source 119 can correspond to gasoline, diesel, other petroleum-based fuels, propane, other compressed gas-based fuels, ethanol, solar panels, batteries, and/or other sources of electrical power. In some embodiments, energy source 119 may include a combination of fuel tanks, batteries, capacitors, and/or flywheels.

Transmission 120 may transmit mechanical power from engine/motor 118 to wheels/tires 121 and/or other possible systems of vehicle 100. As such, transmission 120 may include a gearbox, a clutch, a differential, and a drive shaft, among other possible components. A drive shaft may include axles that connect to one or more wheels/tires 121.

Wheels/tires 121 of vehicle 100 may have various configurations within example embodiments. For instance, vehicle 100 may exist in a unicycle, bicycle/motorcycle, tricycle, or car/truck four-wheel format, among other possible configurations. As such, wheels/tires 121 may connect to vehicle 100 in various ways and can exist in different materials, such as metal and rubber.

Sensor system 104 can include various types of sensors, such as Global Positioning System (GPS) 122, inertial measurement unit (IMU) 124, radar 126, lidar 128, camera 130, steering sensor 123, and throttle/brake sensor 125, among other possible sensors. In some embodiments, sensor system 104 may also include sensors configured to monitor internal systems of the vehicle 100 (e.g., O₂ monitor, fuel gauge, engine oil temperature, or brake wear).

GPS 122 may include a transceiver operable to provide information regarding the position of vehicle 100 with respect to the Earth. IMU 124 may have a configuration that uses one or more accelerometers and/or gyroscopes and may sense position and orientation changes of vehicle 100 based on inertial acceleration. For example, IMU 124 may detect a pitch and yaw of the vehicle 100 while vehicle 100 is stationary or in motion.

Radar 126 may represent one or more systems configured to use radio signals to sense objects, including the speed and heading of the objects, within the surrounding environment of vehicle 100. As such, radar 126 may include antennas configured to transmit and receive radio signals. In some embodiments, radar 126 may correspond to a mountable radar configured to obtain measurements of the surrounding environment of vehicle 100.

Lidar 128 may include one or more laser sources, a laser scanner, and one or more detectors, among other system components, and may operate in a coherent mode (e.g., using heterodyne detection) or in an incoherent detection mode (i.e., time-of-flight mode). In some embodiments, the one or more detectors of the lidar 128 may include one or more photodetectors, which may be especially sensitive detectors (e.g., avalanche photodiodes). In some examples, such photodetectors may be capable of detecting single photons (e.g., single-photon avalanche diodes (SPADs)). Further, such photodetectors can be arranged (e.g., through an electrical connection in series) into an array (e.g., as in a silicon photomultiplier (SiPM)). In some examples, the one or more photodetectors are Geiger-mode operated devices and the lidar includes subcomponents designed for such Geiger-mode operation.

Camera 130 may include one or more devices (e.g., still camera, video camera, a thermal imaging camera, a stereo camera, or a night vision camera) configured to capture images of the surrounding environment of vehicle 100.

Steering sensor 123 may sense a steering angle of vehicle 100, which may involve measuring an angle of the steering wheel or measuring an electrical signal representative of the angle of the steering wheel. In some embodiments, steering sensor 123 may measure an angle of the wheels of the vehicle 100, such as detecting an angle of the wheels with respect to a forward axis of the vehicle 100. Steering sensor 123 may also be configured to measure a combination (or a subset) of the angle of the steering wheel, electrical signal representing the angle of the steering wheel, and the angle of the wheels of vehicle 100.

Throttle/brake sensor 125 may detect the position of either the throttle position or brake position of vehicle 100. For instance, throttle/brake sensor 125 may measure the angle of both the gas pedal (throttle) and brake pedal or may measure an electrical signal that could represent, for instance, an angle of a gas pedal (throttle) and/or an angle of a brake pedal. Throttle/brake sensor 125 may also measure an angle of a throttle body of vehicle 100, which may include part of the physical mechanism that provides modulation of energy source 119 to engine/motor 118 (e.g., a butterfly valve or a carburetor). Additionally, throttle/brake sensor 125 may measure a pressure of one or more brake pads on a rotor of vehicle 100 or a combination (or a subset) of the angle of the gas pedal (throttle) and brake pedal, electrical signal representing the angle of the gas pedal (throttle) and brake pedal, the angle of the throttle body, and the pressure that at least one brake pad is applying to a rotor of vehicle 100. In other embodiments, throttle/brake sensor 125 may be configured to measure a pressure applied to a pedal of the vehicle, such as a throttle or brake pedal.

Control system 106 may include components configured to assist in navigating vehicle 100, such as steering unit 132, throttle 134, brake unit 136, sensor fusion algorithm 138, computer vision system 140, navigation/pathing system 142, and obstacle avoidance system 144. More specifically, steering unit 132 may be operable to adjust the heading of vehicle 100, and throttle 134 may control the operating speed of engine/motor 118 to control the acceleration of vehicle 100. Brake unit 136 may decelerate vehicle 100, which may involve using friction to decelerate wheels/tires 121. In some embodiments, brake unit 136 may convert kinetic energy of wheels/tires 121 to electric current for subsequent use by a system or systems of vehicle 100.

Sensor fusion algorithm 138 may include a Kalman filter, Bayesian network, or other algorithms that can process data from sensor system 104. In some embodiments, sensor fusion algorithm 138 may provide assessments based on incoming sensor data, such as evaluations of individual objects and/or features, evaluations of a particular situation, and/or evaluations of potential impacts within a given situation.

Computer vision system 140 may include hardware and software (e.g., a general purpose processor such as a central processing unit (CPU), a specialized processor such as a graphical processing unit (GPU) or a tensor processing unit (TPU), an application-specific integrated circuit (ASIC), a field programmable gate array (FPGA), a volatile memory, a non-volatile memory, or one or more machine-learned models) operable to process and analyze images in an effort to determine objects that are in motion (e.g., other vehicles, pedestrians, bicyclists, or animals) and objects that are not in motion (e.g., traffic lights, roadway boundaries, speedbumps, or potholes). As such, computer vision system 140 may use object recognition, Structure From Motion (SFM), video tracking, and other algorithms used in computer vision, for instance, to recognize objects, map an environment, track objects, estimate the speed of objects, etc.

Navigation/pathing system 142 may determine a driving path for vehicle 100, which may involve dynamically adjusting navigation during operation. As such, navigation/pathing system 142 may use data from sensor fusion algorithm 138, GPS 122, and maps, among other sources to navigate vehicle 100. Obstacle avoidance system 144 may evaluate potential obstacles based on sensor data and cause systems of vehicle 100 to avoid or otherwise negotiate the potential obstacles.

As shown in Figure 1, vehicle 100 may also include peripherals 108, such as wireless communication system 146, touchscreen 148, interior microphone 150, and/or speaker 152. Peripherals 108 may provide controls or other elements for a user to interact with user interface 116. For example, touchscreen 148 may provide information to users of vehicle 100. User interface 116 may also accept input from the user via touchscreen 148. Peripherals 108 may also enable vehicle 100 to communicate with devices, such as other vehicle devices.

Wireless communication system 146 may wirelessly communicate with one or more devices directly or via a communication network. For example, wireless communication system 146 could use 3G cellular communication, such as code-division multiple access (CDMA), evolution-data optimized (EVDO), global system for mobile communications (GSM) / general packet radio service (GPRS), or cellular communication, such as 4G worldwide interoperability for microwave access (WiMAX) or long-term evolution (LTE), or 5G. Alternatively, wireless communication system 146 may communicate with a wireless local area network (WLAN) using WIFI^{®} or other possible connections. Wireless communication system 146 may also communicate directly with a device using an infrared link, Bluetooth, or ZigBee, for example. Other wireless protocols, such as various vehicular communication systems, are possible within the context of the disclosure. For example, wireless communication system 146 may include one or more dedicated short-range communications (DSRC) devices that could include public and/or private data communications between vehicles and/or roadside stations.

Vehicle 100 may include power supply 110 for powering components. Power supply 110 may include a rechargeable lithium-ion or lead-acid battery in some embodiments. For instance, power supply 110 may include one or more batteries configured to provide electrical power. Vehicle 100 may also use other types of power supplies. In an example embodiment, power supply 110 and energy source 119 may be integrated into a single energy source.

Vehicle 100 may also include computer system 112 to perform operations, such as operations described therein. As such, computer system 112 may include at least one processor 113 (which could include at least one microprocessor) operable to execute instructions 115 stored in a non-transitory, computer-readable medium, such as data storage 114. In some embodiments, computer system 112 may represent a plurality of computing devices that may serve to control individual components or subsystems of vehicle 100 in a distributed fashion.

In some embodiments, data storage 114 may contain instructions 115 (e.g., program logic) executable by processor 113 to execute various functions of vehicle 100, including those described above in connection with Figure 1. Data storage 114 may contain additional instructions as well, including instructions to transmit data to, receive data from, interact with, and/or control one or more of propulsion system 102, sensor system 104, control system 106, and peripherals 108.

In addition to instructions 115, data storage 114 may store data such as roadway maps, path information, among other information. Such information may be used by vehicle 100 and computer system 112 during the operation of vehicle 100 in the autonomous, semi-autonomous, and/or manual modes.

Vehicle 100 may include user interface 116 for providing information to or receiving input from a user of vehicle 100. User interface 116 may control or enable control of content and/or the layout of interactive images that could be displayed on touchscreen 148. Further, user interface 116 could include one or more input/output devices within the set of peripherals 108, such as wireless communication system 146, touchscreen 148, microphone 150, and speaker 152.

Computer system 112 may control the function of vehicle 100 based on inputs received from various subsystems (e.g., propulsion system 102, sensor system 104, or control system 106), as well as from user interface 116. For example, computer system 112 may utilize input from sensor system 104 in order to estimate the output produced by propulsion system 102 and control system 106. Depending upon the embodiment, computer system 112 could be operable to monitor many aspects of vehicle 100 and its subsystems. In some embodiments, computer system 112 may disable some or all functions of the vehicle 100 based on signals received from sensor system 104.

The components of vehicle 100 could be configured to work in an interconnected fashion with other components within or outside their respective systems. For instance, in an example embodiment, camera 130 could capture a plurality of images that could represent information about a state of a surrounding environment of vehicle 100 operating in an autonomous or semi-autonomous mode. The state of the surrounding environment could include parameters of the road on which the vehicle is operating. For example, computer vision system 140 may be able to recognize the slope (grade) or other features based on the plurality of images of a roadway. Additionally, the combination of GPS 122 and the features recognized by computer vision system 140 may be used with map data stored in data storage 114 to determine specific road parameters. Further, radar 126 and/or lidar 128, and/or some other environmental mapping, ranging, and/or positioning sensor system may also provide information about the surroundings of the vehicle.

In other words, a combination of various sensors (which could be termed input-indication and output-indication sensors) and computer system 112 could interact to provide an indication of an input provided to control a vehicle or an indication of the surroundings of a vehicle.

In some embodiments, computer system 112 may make a determination about various objects based on data that is provided by systems other than the radio system. For example, vehicle 100 may have lasers or other optical sensors configured to sense objects in a field of view of the vehicle. Computer system 112 may use the outputs from the various sensors to determine information about objects in a field of view of the vehicle, and may determine distance and direction information to the various objects. Computer system 112 may also determine whether objects are desirable or undesirable based on the outputs from the various sensors.

Although Figure 1 shows various components of vehicle 100 (i.e., wireless communication system 146, computer system 112, data storage 114, and user interface 116) as being integrated into the vehicle 100, one or more of these components could be mounted or associated separately from vehicle 100. For example, data storage 114 could, in part or in full, exist separate from vehicle 100. Thus, vehicle 100 could be provided in the form of device elements that may be located separately or together. The device elements that make up vehicle 100 could be communicatively coupled together in a wired and/or wireless fashion.

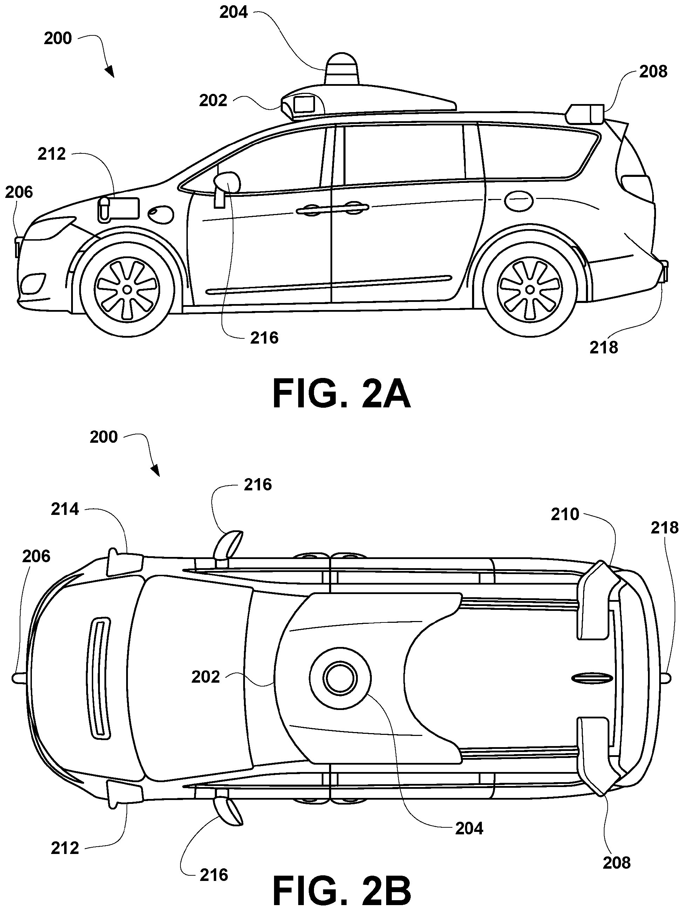

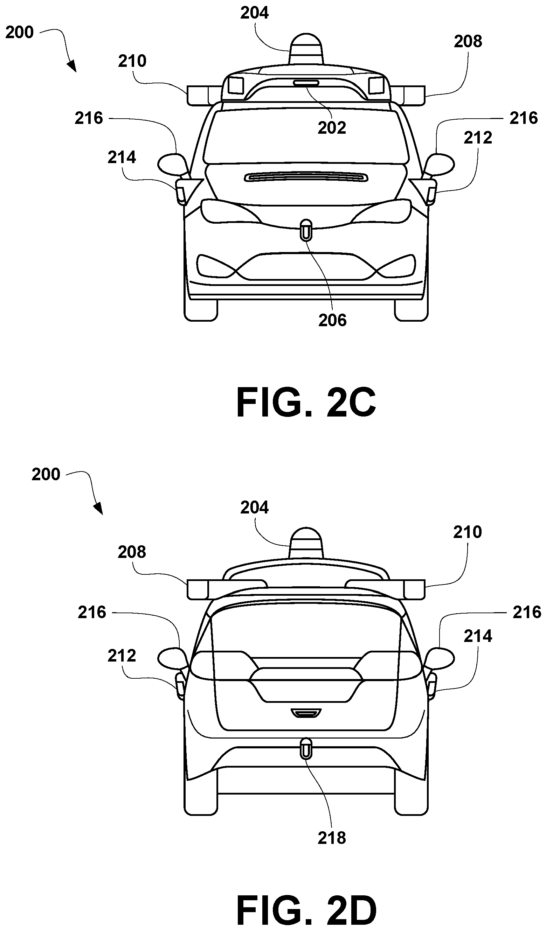

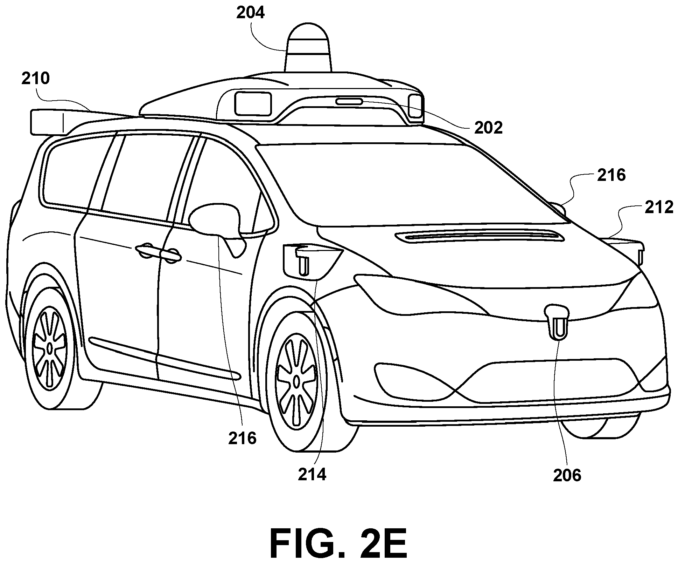

Figures 2A-2E show an example vehicle 200 (e.g., a fully autonomous vehicle, a semi-autonomous vehicle) that can include some or all of the functions described in connection with vehicle 100 in reference to Figure 1. Although vehicle 200 is illustrated in Figures 2A-2E as a van with side view mirrors for illustrative purposes, the present disclosure is not so limited. For instance, the vehicle 200 can represent a truck, a car, a semi-trailer truck, a motorcycle, a golf cart, an off-road vehicle, a farm vehicle, or any other vehicle that is described elsewhere herein (e.g., buses, boats, airplanes, helicopters, drones, lawn mowers, earth movers, submarines, all-terrain vehicles, snowmobiles, aircraft, recreational vehicles, amusement park vehicles, farm equipment, construction equipment or vehicles, warehouse equipment or vehicles, factory equipment or vehicles, trams, trains, trolleys, sidewalk delivery vehicles, or robot devices).

The example vehicle 200 may include one or more sensor systems 202, 204, 206, 208, 210, 212, 214, and 218. In some embodiments, sensor systems 202, 204, 206, 208, 210, 212, 214, and/or 218 could represent one or more optical systems (e.g. cameras), one or more lidars, one or more radars, one or more inertial sensors, one or more humidity sensors, one or more acoustic sensors (e.g., microphones or sonar devices), or one or more other sensors configured to sense information about an environment surrounding the vehicle 200. In other words, any sensor system now known or later created could be coupled to the vehicle 200 and/or could be utilized in conjunction with various operations of the vehicle 200. As an example, a lidar could be utilized in self-driving or other types of navigation, planning, perception, and/or mapping operations of the vehicle 200. In addition, sensor systems 202, 204, 206, 208, 210, 212, 214, and/or 218 could represent a combination of sensors described herein (e.g., one or more lidars and radars; one or more lidars and cameras; one or more cameras and radars; one or more lidars, cameras, and radars).

Note that the number, location, and type of sensor systems (e.g., 202, 204) depicted in Figures 2A-E are intended as a non-limiting example of the location, number, and type of such sensor systems of an autonomous or semi-autonomous vehicle. Alternative numbers, locations, types, and configurations of such sensors are possible (e.g., to comport with vehicle size, shape, aerodynamics, fuel economy, aesthetics, or other conditions, to reduce cost, to adapt to specialized environmental or application circumstances). For example, the sensor systems (e.g., 202, 204) could be disposed in various other locations on the vehicle (e.g., at location 216) and could have fields of view that correspond to internal and/or surrounding environments of the vehicle 200.

The sensor system 202 may be mounted atop the vehicle 200 and may include one or more sensors configured to detect information about an environment surrounding the vehicle 200, and output indications of the information. For example, sensor system 202 can include any combination of cameras, radars, lidars, inertial sensors, humidity sensors, and acoustic sensors (e.g., microphones, sonar devices). The sensor system 202 can include one or more movable mounts that could be operable to adjust the orientation of one or more sensors in the sensor system 202. In one embodiment, the movable mount could include a rotating platform that could scan sensors so as to obtain information from each direction around the vehicle 200. In another embodiment, the movable mount of the sensor system 202 could be movable in a scanning fashion within a particular range of angles and/or azimuths and/or elevations. The sensor system 202 could be mounted atop the roof of a car, although other mounting locations are possible.

Additionally, the sensors of sensor system 202 could be distributed in different locations and need not be collocated in a single location. Furthermore, each sensor of sensor system 202 can be configured to be moved or scanned independently of other sensors of sensor system 202. Additionally or alternatively, multiple sensors may be mounted at one or more of the sensor locations 202, 204, 206, 208, 210, 212, 214, and/or 218. For example, there may be two lidar devices mounted at a sensor location and/or there may be one lidar device and one radar mounted at a sensor location.

The one or more sensor systems 202, 204, 206, 208, 210, 212, 214, and/or 218 could include one or more lidar sensors. For example, the lidar sensors could include a plurality of light-emitter devices arranged over a range of angles with respect to a given plane (e.g., the x-y plane). For example, one or more of the sensor systems 202, 204, 206, 208, 210, 212, 214, and/or 218 may be configured to rotate or pivot about an axis (e.g., the z-axis) perpendicular to the given plane so as to illuminate an environment surrounding the vehicle 200 with light pulses. Based on detecting various aspects of reflected light pulses (e.g., the elapsed time of flight, polarization, and/or intensity), information about the surrounding environment may be determined.

In an example embodiment, sensor systems 202, 204, 206, 208, 210, 212, 214, and/or 218 may be configured to provide respective point cloud information that may relate to physical objects within the surrounding environment of the vehicle 200. While vehicle 200 and sensor systems 202, 204, 206, 208, 210, 212, 214, and 218 are illustrated as including certain features, it will be understood that other types of sensor systems are contemplated within the scope of the present disclosure. Further, the example vehicle 200 can include any of the components described in connection with vehicle 100 of Figure 1.

In an example configuration, one or more radars can be located on vehicle 200. Similar to radar 126 described above, the one or more radars may include antennas configured to transmit and receive radio waves (e.g., electromagnetic waves having frequencies between 30 Hz and 300 GHz). Such radio waves may be used to determine the distance to and/or velocity of one or more objects in the surrounding environment of the vehicle 200. For example, one or more sensor systems 202, 204, 206, 208, 210, 212, 214, and/or 218 could include one or more radars. In some examples, one or more radars can be located near the rear of the vehicle 200 (e.g., sensor systems 208, 210), to actively scan the environment near the back of the vehicle 200 for the presence of radio-reflective objects. Similarly, one or more radars can be located near the front of the vehicle 200 (e.g., sensor systems 212, 214) to actively scan the environment near the front of the vehicle 200. A radar can be situated, for example, in a location suitable to illuminate a region including a forward-moving path of the vehicle 200 without occlusion by other features of the vehicle 200. For example, a radar can be embedded in and/or mounted in or near the front bumper, front headlights, cowl, and/or hood, etc. Furthermore, one or more additional radars can be located to actively scan the side and/or rear of the vehicle 200 for the presence of radio-reflective objects, such as by including such devices in or near the rear bumper, side panels, rocker panels, and/or undercarriage, etc.

The vehicle 200 can include one or more cameras. For example, the one or more sensor systems 202, 204, 206, 208, 210, 212, 214, and/or 218 could include one or more cameras. The camera can be a photosensitive instrument, such as a still camera, a video camera, a thermal imaging camera, a stereo camera, a night vision camera, etc., that is configured to capture a plurality of images of the surrounding environment of the vehicle 200. To this end, the camera can be configured to detect visible light, and can additionally or alternatively be configured to detect light from other portions of the spectrum, such as infrared or ultraviolet light. The camera can be a two-dimensional detector, and can optionally have a three-dimensional spatial range of sensitivity. In some embodiments, the camera can include, for example, a range detector configured to generate a two-dimensional image indicating distance from the camera to a number of points in the surrounding environment. To this end, the camera may use one or more range detecting techniques. For example, the camera can provide range information by using a structured light technique in which the vehicle 200 illuminates an object in the surrounding environment with a predetermined light pattern, such as a grid or checkerboard pattern and uses the camera to detect a reflection of the predetermined light pattern from environmental surroundings. Based on distortions in the reflected light pattern, the vehicle 200 can determine the distance to the points on the object. The predetermined light pattern may comprise infrared light, or radiation at other suitable wavelengths for such measurements. In some examples, the camera can be mounted inside a front windshield of the vehicle 200. Specifically, the camera can be situated to capture images from a forward-looking view with respect to the orientation of the vehicle 200. Other mounting locations and viewing angles of the camera can also be used, either inside or outside the vehicle 200. Further, the camera can have associated optics operable to provide an adjustable field of view. Still further, the camera can be mounted to vehicle 200 with a movable mount to vary a pointing angle of the camera, such as via a pan/tilt mechanism.

The vehicle 200 may also include one or more acoustic sensors (e.g., one or more of the sensor systems 202, 204, 206, 208, 210, 212, 214, 216, 218 may include one or more acoustic sensors) used to sense a surrounding environment of vehicle 200. Acoustic sensors may include microphones (e.g., piezoelectric microphones, condenser microphones, ribbon microphones, and/or microelectromechanical systems (MEMS) microphones) used to sense acoustic waves (i.e., pressure differentials) in a fluid (e.g., air) of the environment surrounding the vehicle 200. Such acoustic sensors may be used to identify sounds in the surrounding environment (e.g., sirens, human speech, animal sounds, and/or alarms) upon which control strategy for vehicle 200 may be based. For example, if the acoustic sensor detects a siren (e.g., an ambulatory siren, and/or a fire engine siren), vehicle 200 may slow down and/or navigate to the edge of a roadway.

Although not shown in Figures 2A-2E, the vehicle 200 can include a wireless communication system (e.g., similar to the wireless communication system 146 of Figure 1 and/or in addition to the wireless communication system 146 of Figure 1). The wireless communication system may include wireless transmitters and receivers that could be configured to communicate with devices external or internal to the vehicle 200. Specifically, the wireless communication system could include transceivers configured to communicate with other vehicles and/or computing devices, for instance, in a vehicular communication system or a roadway station. Examples of such vehicular communication systems include DSRC, radio frequency identification (RFID), and other proposed communication standards directed towards intelligent transport systems.

The vehicle 200 may include one or more other components in addition to or instead of those shown. The additional components may include electrical or mechanical functionality.

A control system of the vehicle 200 may be configured to control the vehicle 200 in accordance with a control strategy from among multiple possible control strategies. The control system may be configured to receive information from sensors coupled to the vehicle 200 (on or off the vehicle 200), modify the control strategy (and an associated driving behavior) based on the information, and control the vehicle 200 in accordance with the modified control strategy. The control system further may be configured to monitor the information received from the sensors, and continuously evaluate driving conditions; and also may be configured to modify the control strategy and driving behavior based on changes in the driving conditions. For example, a route taken by a vehicle from one destination to another may be modified based on driving conditions. Additionally or alternatively, the velocity, acceleration, turn angle, follow distance (i.e., distance to a vehicle ahead of the present vehicle), lane selection, etc. could all be modified in response to changes in the driving conditions.

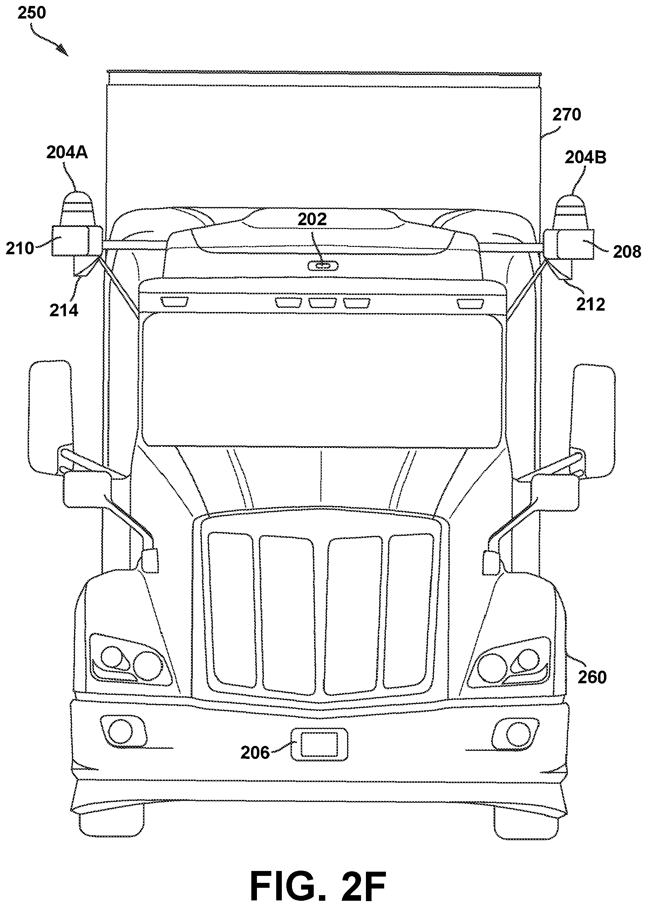

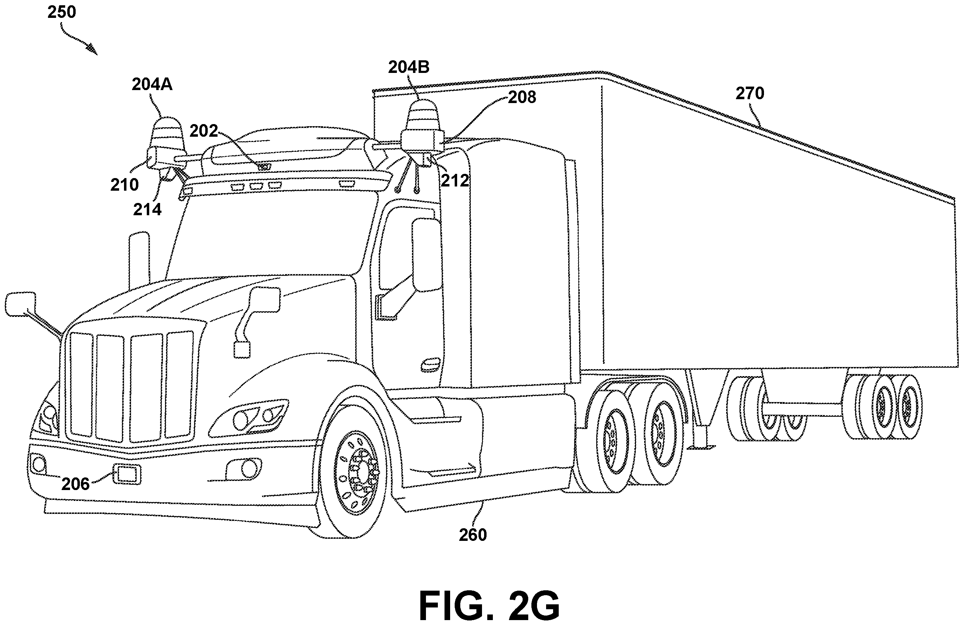

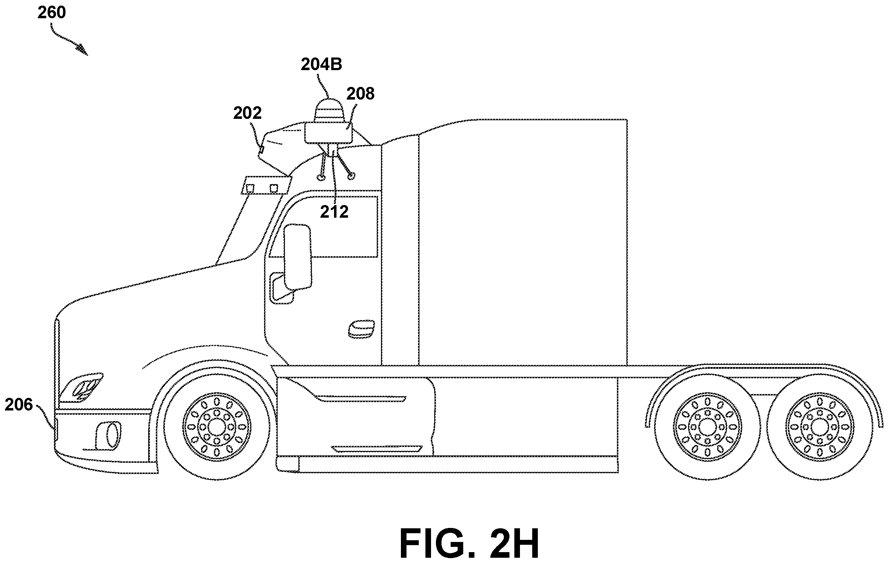

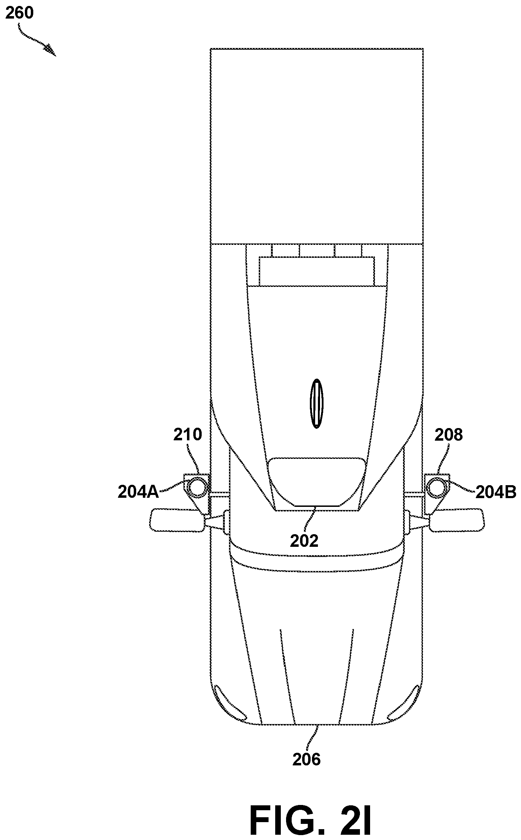

As described above, in some embodiments, the vehicle 200 may take the form of a van, but alternate forms are also possible and are contemplated herein. As such, Figures 2F-2I illustrate embodiments where a vehicle 250 takes the form of a semi-truck. For example, Figure 2F illustrates a front-view of the vehicle 250 and Figure 2G illustrates an isometric view of the vehicle 250. In embodiments where the vehicle 250 is a semi-truck, the vehicle 250 may include a tractor portion 260 and a trailer portion 270 (illustrated in Figure 2G). Figures 2H and 2I provide a side view and a top view, respectively, of the tractor portion 260. Similar to the vehicle 200 illustrated above, the vehicle 250 illustrated in Figures 2F-2I may also include a variety of sensor systems (e.g., similar to the sensor systems 202, 206, 208, 210, 212, 214 shown and described with reference to Figures 2A-2E). In some embodiments, whereas the vehicle 200 of Figures 2A-2E may only include a single copy of some sensor systems (e.g., the sensor system 204), the vehicle 250 illustrated in Figures 2F-2I may include multiple copies of that sensor system (e.g., the sensor systems 204A and 204B, as illustrated).

While drawings and description throughout may reference a given form of vehicle (e.g., the semi-truck vehicle 250 or the van vehicle 200), it is understood that embodiments described herein can be equally applied in a variety of vehicle contexts (e.g., with modifications employed to account for a form factor of vehicle). For example, sensors and/or other components described or illustrated as being part of the van vehicle 200 could also be used (e.g., for navigation and/or obstacle detection and avoidance) in the semi-truck vehicle 250

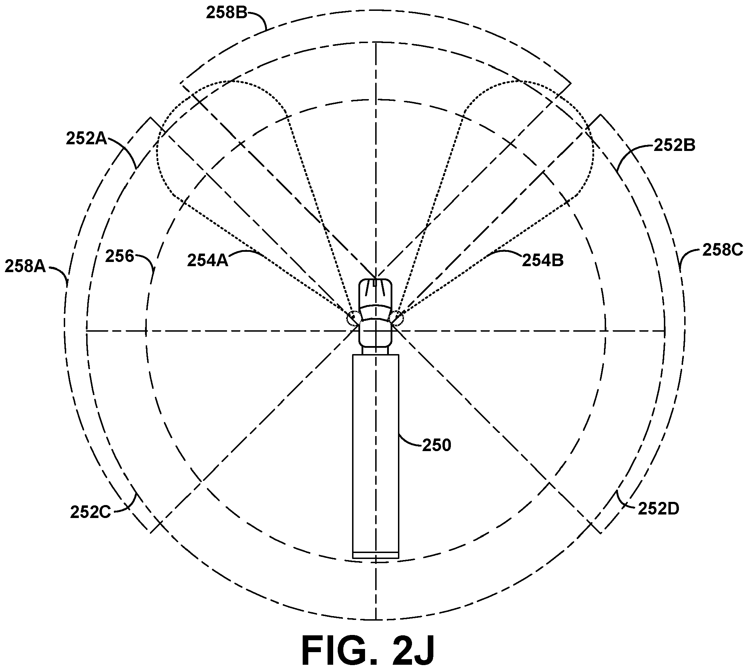

Figure 2J illustrates various sensor fields of view (e.g., associated with the vehicle 250 described above). As described above, vehicle 250 may contain a plurality of sensors / sensor units. The locations of the various sensors may correspond to the locations of the sensors disclosed in Figures 2F-2I, for example. However, in some instances, the sensors may have other locations. Sensors location reference numbers are omitted from Figure 2J for simplicity of the drawing. For each sensor unit of vehicle 250, Figure 2J illustrates a representative field of view (e.g., fields of view labeled as 252A, 252B, 252C, 252D, 254A, 254B, 256, 258A, 258B, and 258C). The field of view of a sensor may include an angular region (e.g., an azimuthal angular region and/or an elevational angular region) over which the sensor may detect objects.

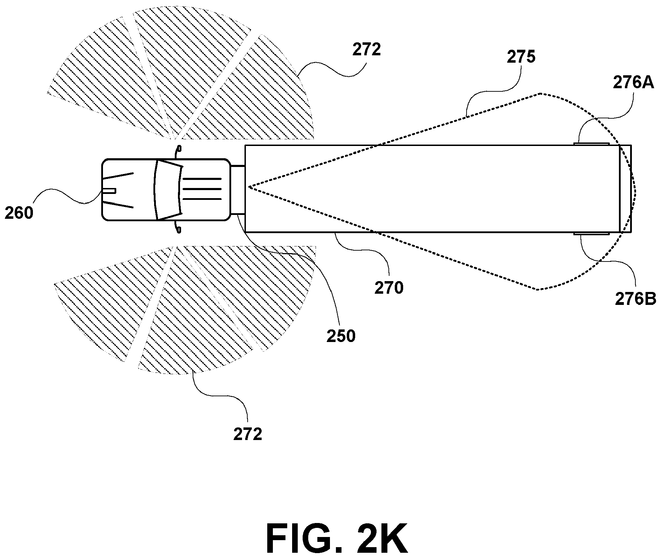

Figure 2K illustrates beam steering for a sensor of a vehicle (e.g., the vehicle 250 shown and described with reference to Figures 2F-2J), according to example embodiments. In various embodiments, a sensor unit of vehicle 250 may be a radar, a lidar, a sonar, etc. Further, in some embodiments, during the operation of the sensor, the sensor may be scanned within the field of view of the sensor. Various different scanning angles for an example sensor are shown as regions 272, which each indicate the angular region over which the sensor is operating. The sensor may periodically or iteratively change the region over which it is operating. In some embodiments, multiple sensors may be used by vehicle 250 to measure regions 272. In addition, other regions may be included in other examples. For instance, one or more sensors may measure aspects of the trailer 270 of vehicle 250 and/or a region directly in front of vehicle 250.

At some angles, region of operation 275 of the sensor may include rear wheels 276A, 276B of trailer 270. Thus, the sensor may measure rear wheel 276A and/or rear wheel 276B during operation. For example, rear wheels 276A, 276B may reflect lidar signals or radar signals transmitted by the sensor. The sensor may receive the reflected signals from rear wheels 276A, 276. Therefore, the data collected by the sensor may include data from the reflections off the wheel.

In some instances, such as when the sensor is a radar, the reflections from rear wheels 276A, 276B may appear as noise in the received radar signals. Consequently, the radar may operate with an enhanced signal to noise ratio in instances where rear wheels 276A, 276B direct radar signals away from the sensor.

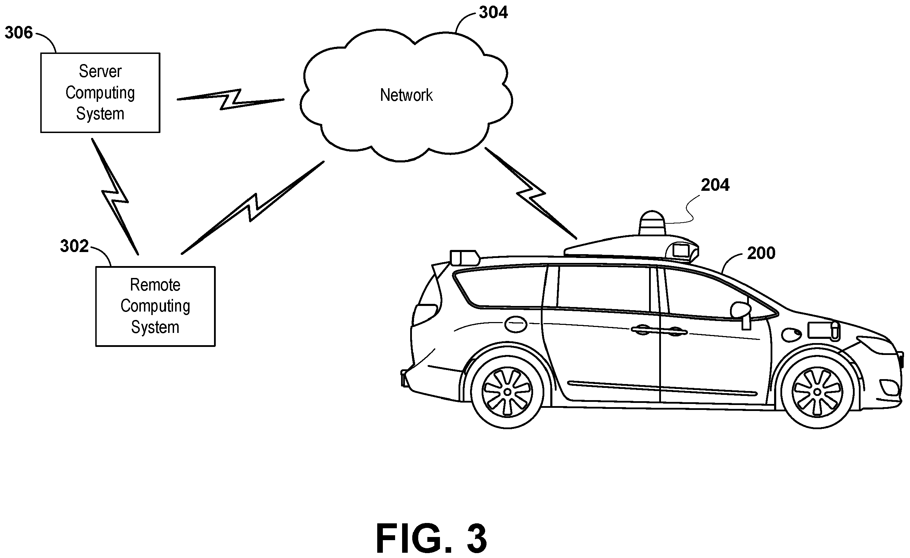

Figure 3 is a conceptual illustration of wireless communication between various computing systems related to an autonomous or semi-autonomous vehicle, according to example embodiments. In particular, wireless communication may occur between remote computing system 302 and vehicle 200 via network 304. Wireless communication may also occur between server computing system 306 and remote computing system 302, and between server computing system 306 and vehicle 200.

Vehicle 200 can correspond to various types of vehicles capable of transporting passengers or objects between locations, and may take the form of any one or more of the vehicles discussed above. In some instances, vehicle 200 may operate in an autonomous or semi-autonomous mode that enables a control system to safely navigate vehicle 200 between destinations using sensor measurements. When operating in an autonomous or semi-autonomous mode, vehicle 200 may navigate with or without passengers. As a result, vehicle 200 may pick up and drop off passengers between desired destinations.

Remote computing system 302 may represent any type of device related to remote assistance techniques, including but not limited to those described herein. Within examples, remote computing system 302 may represent any type of device configured to (i) receive information related to vehicle 200, (ii) provide an interface through which a human operator can in turn perceive the information and input a response related to the information, and (iii) transmit the response to vehicle 200 or to other devices. Remote computing system 302 may take various forms, such as a workstation, a desktop computer, a laptop, a tablet, a mobile phone (e.g., a smart phone), and/or a server. In some examples, remote computing system 302 may include multiple computing devices operating together in a network configuration.

Remote computing system 302 may include one or more subsystems and components similar or identical to the subsystems and components of vehicle 200. At a minimum, remote computing system 302 may include a processor configured for performing various operations described herein. In some embodiments, remote computing system 302 may also include a user interface that includes input/output devices, such as a touchscreen and a speaker. Other examples are possible as well.

Network 304 represents infrastructure that enables wireless communication between remote computing system 302 and vehicle 200. Network 304 also enables wireless communication between server computing system 306 and remote computing system 302, and between server computing system 306 and vehicle 200.

The position of remote computing system 302 can vary within examples. For instance, remote computing system 302 may have a remote position from vehicle 200 that has a wireless communication via network 304. In another example, remote computing system 302 may correspond to a computing device within vehicle 200 that is separate from vehicle 200, but with which a human operator can interact while a passenger or driver of vehicle 200. In some examples, remote computing system 302 may be a computing device with a touchscreen operable by the passenger of vehicle 200.

In some embodiments, operations described herein that are performed by remote computing system 302 may be additionally or alternatively performed by vehicle 200 (i.e., by any system(s) or subsystem(s) of vehicle 200). In other words, vehicle 200 may be configured to provide a remote assistance mechanism with which a driver or passenger of the vehicle can interact.

Server computing system 306 may be configured to wirelessly communicate with remote computing system 302 and vehicle 200 via network 304 (or perhaps directly with remote computing system 302 and/or vehicle 200). Server computing system 306 may represent any computing device configured to receive, store, determine, and/or send information relating to vehicle 200 and the remote assistance thereof. As such, server computing system 306 may be configured to perform any operation(s), or portions of such operation(s), that is/are described herein as performed by remote computing system 302 and/or vehicle 200. Some embodiments of wireless communication related to remote assistance may utilize server computing system 306, while others may not.

Server computing system 306 may include one or more subsystems and components similar or identical to the subsystems and components of remote computing system 302 and/or vehicle 200, such as a processor configured for performing various operations described herein, and a wireless communication interface for receiving information from, and providing information to, remote computing system 302 and vehicle 200.

The various systems described above may perform various operations. These operations and related features will now be described.

In line with the discussion above, a computing system (e.g., remote computing system 302, server computing system 306, a computing system local to vehicle 200) may operate to use a camera to capture images of the surrounding environment of an autonomous or semi-autonomous vehicle. In general, at least one computing system will be able to analyze the images and possibly control the autonomous or semi-autonomous vehicle.

In some embodiments, to facilitate autonomous or semi-autonomous operation, a vehicle (e.g., vehicle 200) may receive data representing objects in an environment surrounding the vehicle (also referred to herein as "environment data") in a variety of ways. A sensor system on the vehicle may provide the environment data representing objects of the surrounding environment. For example, the vehicle may have various sensors, including a camera, a radar, a lidar, a microphone, a radio unit, and other sensors. Each of these sensors may communicate environment data to a processor in the vehicle about information each respective sensor receives.

In one example, a camera may be configured to capture still images and/or video. In some embodiments, the vehicle may have more than one camera positioned in different orientations. Also, in some embodiments, the camera may be able to move to capture images and/or video in different directions. The camera may be configured to store captured images and video to a memory for later processing by a processing system of the vehicle. The captured images and/or video may be the environment data. Further, the camera may include an image sensor as described herein.

In another example, a radar may be configured to transmit an electromagnetic signal that will be reflected by various objects near the vehicle, and then capture electromagnetic signals that reflect off the objects. The captured reflected electromagnetic signals may enable the radar (or processing system) to make various determinations about objects that reflected the electromagnetic signal. For example, the distances to and positions of various reflecting objects may be determined. In some embodiments, the vehicle may have more than one radar in different orientations. The radar may be configured to store captured information to a memory for later processing by a processing system of the vehicle. The information captured by the radar may be environment data.

In another example, a lidar may be configured to transmit an electromagnetic signal (e.g., infrared light, such as that from a gas or diode laser, or other possible light source) that will be reflected by target objects near the vehicle. The lidar may be able to capture the reflected electromagnetic (e.g., infrared light) signals. The captured reflected electromagnetic signals may enable the range-finding system (or processing system) to determine a range to various objects. The lidar may also be able to determine a velocity or speed of target objects and store it as environment data.

Additionally, in an example, a microphone may be configured to capture audio of the environment surrounding the vehicle. Sounds captured by the microphone may include emergency vehicle sirens and the sounds of other vehicles. For example, the microphone may capture the sound of the siren of an ambulance, fire engine, or police vehicle. A processing system may be able to identify that the captured audio signal is indicative of an emergency vehicle. In another example, the microphone may capture the sound of an exhaust of another vehicle, such as that from a motorcycle. A processing system may be able to identify that the captured audio signal is indicative of a motorcycle. The data captured by the microphone may form a portion of the environment data.

In yet another example, the radio unit may be configured to transmit an electromagnetic signal that may take the form of a Bluetooth signal, 802.11 signal, and/or other radio technology signal. The first electromagnetic radiation signal may be transmitted via one or more antennas located in a radio unit. Further, the first electromagnetic radiation signal may be transmitted with one of many different radio-signaling modes. However, in some embodiments it is desirable to transmit the first electromagnetic radiation signal with a signaling mode that requests a response from devices located near the autonomous or semi-autonomous vehicle. The processing system may be able to detect nearby devices based on the responses communicated back to the radio unit and use this communicated information as a portion of the environment data.

In some embodiments, the processing system may be able to combine information from the various sensors in order to make further determinations of the surrounding environment of the vehicle. For example, the processing system may combine data from both radar information and a captured image to determine if another vehicle or pedestrian is in front of the autonomous or semi-autonomous vehicle. In other embodiments, other combinations of sensor data may be used by the processing system to make determinations about the surrounding environment.

While operating in an autonomous mode (or semi-autonomous mode), the vehicle may control its operation with little-to-no human input. For example, a human-operator may enter an address into the vehicle and the vehicle may then be able to drive, without further input from the human (e.g., the human does not have to steer or touch the brake/gas pedals), to the specified destination. Further, while the vehicle is operating autonomously or semi-autonomously, the sensor system may be receiving environment data. The processing system of the vehicle may alter the control of the vehicle based on environment data received from the various sensors. In some examples, the vehicle may alter a velocity of the vehicle in response to environment data from the various sensors. The vehicle may change velocity in order to avoid obstacles, obey traffic laws, etc. When a processing system in the vehicle identifies objects near the vehicle, the vehicle may be able to change velocity, or alter the movement in another way.

When the vehicle detects an object but is not highly confident in the detection of the object, the vehicle can request a human operator (or a more powerful computer) to perform one or more remote assistance tasks, such as (i) confirm whether the object is in fact present in the surrounding environment (e.g., if there is actually a stop sign or if there is actually no stop sign present), (ii) confirm whether the vehicle's identification of the object is correct, (iii) correct the identification if the identification was incorrect, and/or (iv) provide a supplemental instruction (or modify a present instruction) for the autonomous or semi-autonomous vehicle. Remote assistance tasks may also include the human operator providing an instruction to control operation of the vehicle (e.g., instruct the vehicle to stop at a stop sign if the human operator determines that the object is a stop sign), although in some scenarios, the vehicle itself may control its own operation based on the human operator's feedback related to the identification of the object.

To facilitate this, the vehicle may analyze the environment data representing objects of the surrounding environment to determine at least one object having a detection confidence below a threshold. A processor in the vehicle may be configured to detect various objects of the surrounding environment based on environment data from various sensors. For example, in one embodiment, the processor may be configured to detect objects that may be important for the vehicle to recognize. Such objects may include pedestrians, bicyclists, street signs, other vehicles, indicator signals on other vehicles, and other various objects detected in the captured environment data.

The detection confidence may be indicative of a likelihood that the determined object is correctly identified in the surrounding environment, or is present in the surrounding environment. For example, the processor may perform object detection of objects within image data in the received environment data, and determine that at least one object has the detection confidence below the threshold based on being unable to identify the object with a detection confidence above the threshold. If a result of an object detection or object recognition of the object is inconclusive, then the detection confidence may be low or below the set threshold.

The vehicle may detect objects of the surrounding environment in various ways depending on the source of the environment data. In some embodiments, the environment data may come from a camera and be image or video data. In other embodiments, the environment data may come from a lidar. The vehicle may analyze the captured image or video data to identify objects in the image or video data. The methods and apparatuses may be configured to monitor image and/or video data for the presence of objects of the surrounding environment. In other embodiments, the environment data may be radar, audio, or other data. The vehicle may be configured to identify objects of the surrounding environment based on the radar, audio, or other data.

In some embodiments, the techniques the vehicle uses to detect objects may be based on a set of known data. For example, data related to environmental objects may be stored to a memory located in the vehicle. The vehicle may compare received data to the stored data to determine objects. In other embodiments, the vehicle may be configured to determine objects based on the context of the data. For example, street signs related to construction may generally have an orange color. Accordingly, the vehicle may be configured to detect objects that are orange, and located near the side of roadways as construction-related street signs. Additionally, when the processing system of the vehicle detects objects in the captured data, it also may calculate a confidence for each object.

Further, the vehicle may also have a confidence threshold. The confidence threshold may vary depending on the type of object being detected. For example, the confidence threshold may be lower for an object that may require a quick responsive action from the vehicle, such as brake lights on another vehicle. However, in other embodiments, the confidence threshold may be the same for all detected objects. When the confidence associated with a detected object is greater than the confidence threshold, the vehicle may assume the object was correctly recognized and responsively adjust the control of the vehicle based on that assumption.

When the confidence associated with a detected object is less than the confidence threshold, the actions that the vehicle takes may vary. In some embodiments, the vehicle may react as if the detected object is present despite the low confidence level. In other embodiments, the vehicle may react as if the detected object is not present.

When the vehicle detects an object of the surrounding environment, it may also calculate a confidence associated with the specific detected object. The confidence may be calculated in various ways depending on the embodiment. In one example, when detecting objects of the surrounding environment, the vehicle may compare environment data to predetermined data relating to known objects. The closer the match between the environment data and the predetermined data, the higher the confidence. In other embodiments, the vehicle may use mathematical analysis of the environment data to determine the confidence associated with the objects.

In response to determining that an object has a detection confidence that is below the threshold, the vehicle may transmit, to the remote computing system, a request for remote assistance with the identification of the object. As discussed above, the remote computing system may take various forms. For example, the remote computing system may be a computing device within the vehicle that is separate from the vehicle, but with which a human operator can interact while a passenger or driver of the vehicle, such as a touchscreen interface for displaying remote assistance information. Additionally or alternatively, as another example, the remote computing system may be a remote computer terminal or other device that is located at a location that is not near the vehicle.

The request for remote assistance may include the environment data that includes the object, such as image data, audio data, etc. The vehicle may transmit the environment data to the remote computing system over a network (e.g., network 304), and in some embodiments, via a server (e.g., server computing system 306). The human operator of the remote computing system may in turn use the environment data as a basis for responding to the request.

In some embodiments, when the object is detected as having a confidence below the confidence threshold, the object may be given a preliminary identification, and the vehicle may be configured to adjust the operation of the vehicle in response to the preliminary identification. Such an adjustment of operation may take the form of stopping the vehicle, switching the vehicle to a human-controlled mode, changing a velocity of the vehicle (e.g., a speed and/or direction), among other possible adjustments.

In other embodiments, even if the vehicle detects an object having a confidence that meets or exceeds the threshold, the vehicle may operate in accordance with the detected object (e.g., come to a stop if the object is identified with high confidence as a stop sign), but may be configured to request remote assistance at the same time as (or at a later time from) when the vehicle operates in accordance with the detected object.

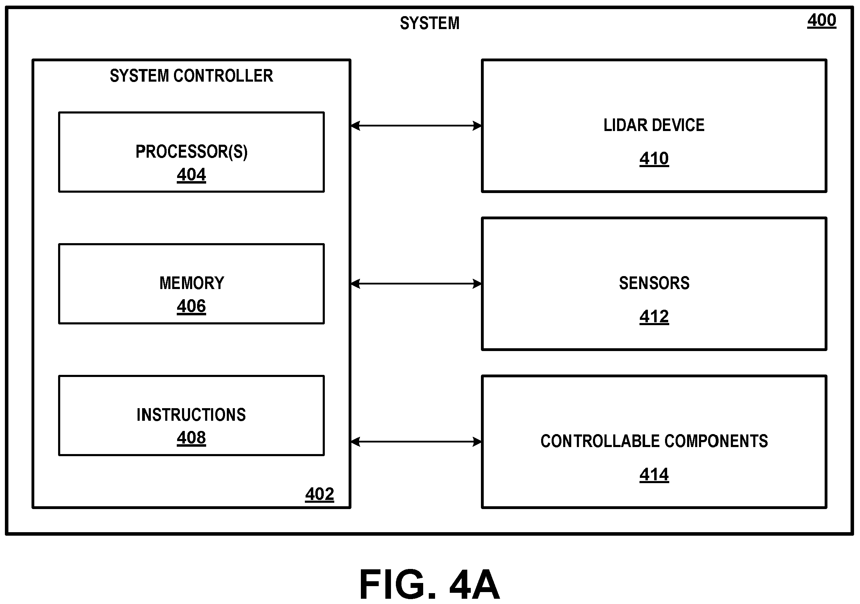

Figure 4A is a block diagram of a system, according to example embodiments. In particular, Figure 4A shows a system 400 that includes a system controller 402, a lidar device 410, a plurality of sensors 412, and a plurality of controllable components 414. System controller 402 includes processor(s) 404, a memory 406, and instructions 408 stored on the memory 406 and executable by the processor(s) 404 to perform functions.

The processor(s) 404 can include one or more processors, such as one or more general-purpose microprocessors (e.g., having a single core or multiple cores) and/or one or more special purpose microprocessors. The one or more processors may include, for instance, one or more central processing units (CPUs), one or more microcontrollers, one or more graphical processing units (GPUs), one or more tensor processing units (TPUs), one or more ASICs, and/or one or more field-programmable gate arrays (FPGAs). Other types of processors, computers, or devices configured to carry out software instructions are also contemplated herein.

The memory 406 may include a computer-readable medium, such as a non-transitory, computer-readable medium, which may include without limitation, read-only memory (ROM), programmable read-only memory (PROM), erasable programmable read-only memory (EPROM), electrically erasable programmable read-only memory (EEPROM), non-volatile random-access memory (e.g., flash memory), a solid state drive (SSD), a hard disk drive (HDD), a Compact Disc (CD), a Digital Video Disk (DVD), a digital tape, read/write (R/W) CDs, R/W DVDs, etc.

The lidar device 410, described further below, includes a plurality of light emitters configured to emit light (e.g., in light pulses) and one or more light detectors configured to detect light (e.g., reflected portions of the light pulses). The lidar device 410 may generate three-dimensional (3D) point cloud data from outputs of the light detector(s), and provide the 3D point cloud data to the system controller 402. The system controller 402, in turn, may perform operations on the 3D point cloud data to determine the characteristics of a surrounding environment (e.g., relative positions of objects within a surrounding environment, edge detection, object detection, and/or proximity sensing).

Similarly, the system controller 402 may use outputs from the plurality of sensors 412 to determine the characteristics of the system 400 and/or characteristics of the surrounding environment. For example, the sensors 412 may include one or more of a GPS, an IMU, an image capture device (e.g., a camera), a light sensor, a heat sensor, and other sensors indicative of parameters relevant to the system 400 and/or the surrounding environment. The lidar device 410 is depicted as separate from the sensors 412 for purposes of example, and may be considered as part of or as the sensors 412 in some examples.

Based on characteristics of the system 400 and/or the surrounding environment determined by the system controller 402 based on the outputs from the lidar device 410 and the sensors 412, the system controller 402 may control the controllable components 414 to perform one or more actions. For example, the system 400 may correspond to a vehicle, in which case the controllable components 414 may include a braking system, a turning system, and/or an accelerating system of the vehicle, and the system controller 402 may change aspects of these controllable components based on characteristics determined from the lidar device 410 and/or sensors 412 (e.g., when the system controller 402 controls the vehicle in an autonomous or semi-autonomous mode). Within examples, the lidar device 410 and the sensors 412 are also controllable by the system controller 402.

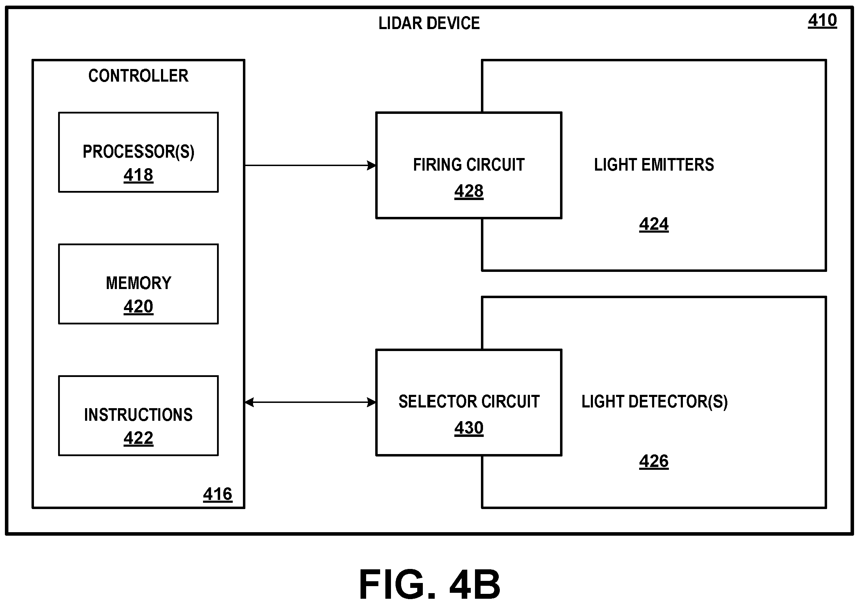

Figure 4B is a block diagram of a lidar device, according to an example embodiment. In particular, Figure 4B shows a lidar device 410, having a controller 416 configured to control a plurality of light emitters 424 and one or more light detector(s), e.g., a plurality of light detectors 426. The lidar device 410 further includes a firing circuit 428 configured to select and provide power to respective light emitters of the plurality of light emitters 424 and may include a selector circuit 430 configured to select respective light detectors of the plurality of light detectors 426. The controller 416 includes processor(s) 418, a memory 420, and instructions 422 stored on the memory 420.

Similar to processor(s) 404, the processor(s) 418 can include one or more processors, such as one or more general-purpose microprocessors and/or one or more special purpose microprocessors. The one or more processors may include, for instance, one or more CPUs, one or more microcontrollers, one or more GPUs, one or more TPUs, one or more ASICs, and/or one or more FPGAs. Other types of processors, computers, or devices configured to carry out software instructions are also contemplated herein.

Similar to memory 406, the memory 420 may include a computer-readable medium, such as a non-transitory, computer-readable medium, such as, but not limited to, ROM, PROM, EPROM, EEPROM, non-volatile random-access memory (e.g., flash memory), a SSD, a HDD, a CD, a DVD, a digital tape, R/W CDs, R/W DVDs, etc.

The instructions 422 are stored on memory 420 and executable by the processor(s) 418 to perform functions related to controlling the firing circuit 428 and the selector circuit 430, for generating 3D point cloud data, and for processing the 3D point cloud data (or perhaps facilitating processing the 3D point cloud data by another computing device, such as the system controller 402).

The controller 416 can determine 3D point cloud data by using the light emitters 424 to emit pulses of light. A time of emission is established for each light emitter and a relative location at the time of emission is also tracked. Aspects of a surrounding environment of the lidar device 410, such as various objects, reflect the pulses of light. For example, when the lidar device 410 is in a surrounding environment that includes a road, such objects may include vehicles, signs, pedestrians, road surfaces, construction cones, etc. Some objects may be more reflective than others, such that an intensity of reflected light may indicate a type of object that reflects the light pulses. Further, surfaces of objects may be at different positions relative to the lidar device 410, and thus take more or less time to reflect portions of light pulses back to the lidar device 410. Accordingly, the controller 416 may track a detection time at which a reflected light pulse is detected by a light detector and a relative position of the light detector at the detection time. By measuring time differences between emission times and detection times, the controller 416 can determine how far the light pulses travel prior to being received, and thus a relative distance of a corresponding object. By tracking relative positions at the emission times and detection times the controller 416 can determine an orientation of the light pulse and reflected light pulse relative to the lidar device 410, and thus a relative orientation of the object. By tracking intensities of received light pulses, the controller 416 can determine how reflective the object is. The 3D point cloud data determined based on this information may thus indicate relative positions of detected reflected light pulses (e.g., within a coordinate system, such as a Cartesian coordinate system, etc.) and intensities of each reflected light pulse.

The firing circuit 428 is used for selecting light emitters for emitting light pulses. The selector circuit 430 similarly is used for sampling outputs from light detectors.

As described above, various types of defects can adversely affect measurements made by sensing devices (e.g., lidar devices or cameras). For example, some sensing devices may include one or more optical components (e.g., lenses, mirrors, waveguides, and/or windows), and one or more defects in or on portions of such optical components can result in improper detections of the surrounding environment. For instance, an optical window (e.g., an optical element through which a camera or lidar captures images of the surrounding environment) may suffer from one or more scratches, cracks, smudges, deformations, air bubbles, impurities (e.g., chemical impurities within the glass or plastic of the optical window), degradations (e.g., decreased optical properties over time), discolorations, imperfect transparencies, or warpings within (e.g., inside a body of) one or more portions of the optical window. Additionally or alternatively, such an optical window may suffer from condensation, dirt, dust, mud, leaves, rain snow, sleet, hail, ice, or insect residue (i.e., the remains of dead insects) on one or more portions of the optical window (e.g., on one or more portions of the optical window that interfaces with the surrounding environment, i.e., on one or more exterior portions of the optical window). It is understood that other types of defects are also possible and are contemplated herein. Further, such defects may attenuate light signals, obscure light signals, block light signals, scatter light signals, redirect light signals, or otherwise interfere with light signals being received from the surrounding environment.

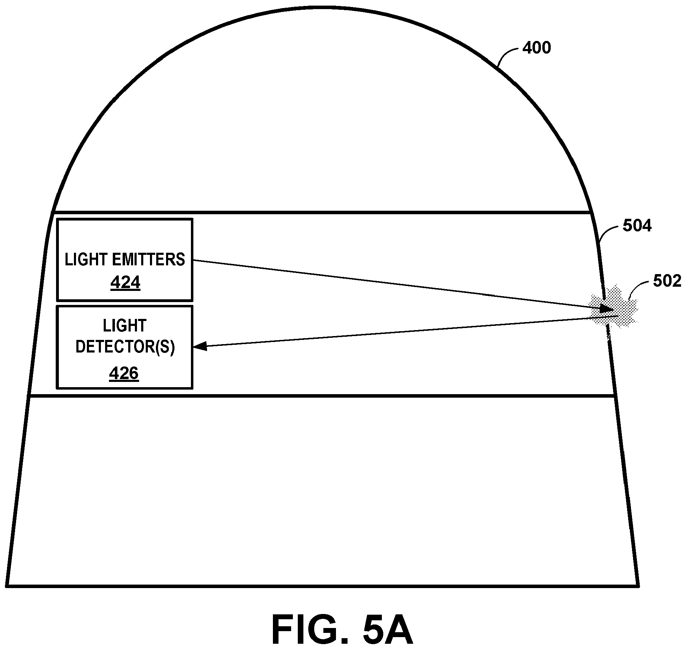

Figure 5A illustrates an example system (e.g., the system 400 shown and described with reference to Figure 4A) suffering from a defect 502 on an optical component 504 (e.g., an optical window) of the system 400. The defect 502 is illustrated as a single leaf on an exterior of the optical component 504, but it is understood that this is purely shown for illustrative purposes and that any number and/or type of defect(s) are also possible (e.g., on or within the optical component 504). As illustrated, the defect 502 may interfere with light signals emitted by light emitters (e.g., light emitters 424 of the lidar device 410, as shown and illustrated in Figure 4B) and/or light signals attempting to be detected by light detectors (e.g., light detectors 426 of the lidar device 410, as shown and illustrated in Figure 4B). Hence, as shown in Figure 5A, the defect 502 may affect measurements made of the surrounding environment using the light emitters 424 / light detectors 426.

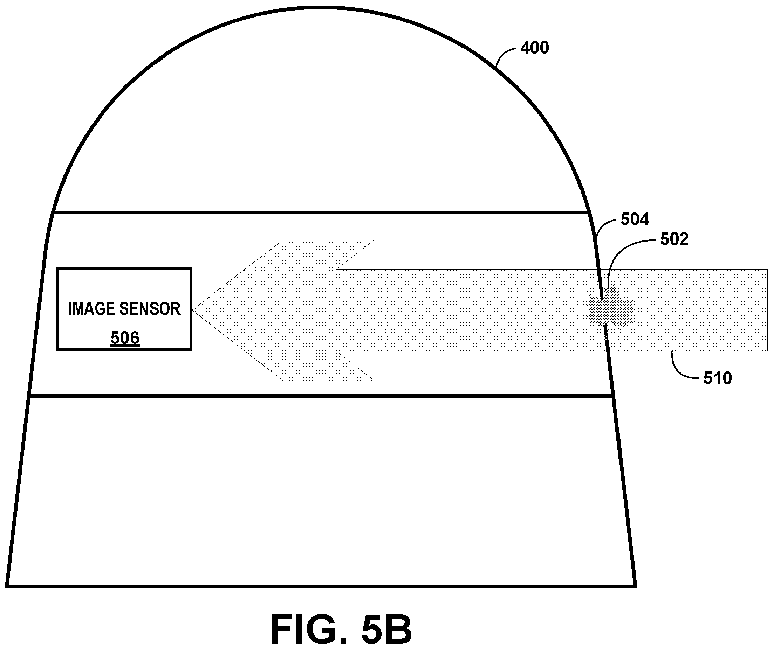

Similar to Figure 5A, Figure 5B illustrates an example system (e.g., the system 400 shown and described with reference to Figure 4A) suffering from a defect 502 on an optical component 504 (e.g., an optical window) of the system 400. The defect 502 is illustrated as a single leaf on an exterior of the optical component 504, but it is understood that this is purely shown for illustrative purposes and that any number and/or type of defect(s) are also possible (e.g., on or within the optical component 504). As illustrated, the defect 502 may interfere with an optical path 510 of an image sensor 506 (e.g., an image sensor of a camera, such as the camera 130 shown and described with reference to Figure 1) attempting to capture an image of the surrounding environment. In some embodiments, the image sensor 506 may include a charge-coupled device (CCD) or other type of image sensor. As shown in Figure 5B, the defect 502 may affect measurements made of the surrounding environment using the image sensor 506.

Mitigating the adverse effects of defects (e.g., the defect 502 shown and described with reference to Figures 5A and 5B) may be desirable. This may be done by detecting the presence of one or more defects and then performing one or more remedial actions (e.g., cleaning the optical component at issue, replacing the optical component at issue, decommissioning all or part of the optical component at issue, flagging the data captured via the optical component by sensors as containing the influence of the defect, performing post-processing on the data captured via the optical component by sensors in order to compensate for the influence of the defect). In order to detect the presence of the one or more defects, techniques as described herein may be performed. Further, such techniques may be performed using one or more devices or systems as described herein.

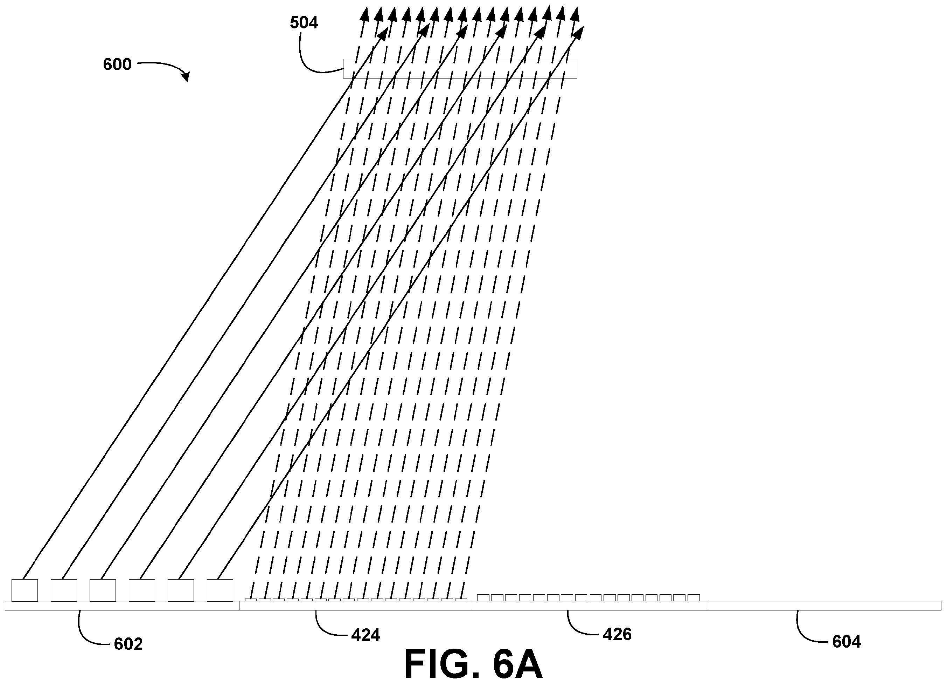

Figure 6A illustrates a lidar device 600 that includes defect-detection components. The lidar device 600 may be used to detect the presence (e.g., and position) of one or more defects on one or more optical components of the lidar device 600. As illustrated, the lidar device 600 may include an array of light emitters (e.g., the light emitters 424 of the lidar device 410 illustrated and described with reference to Figure 4B), an array of light detectors (e.g., the light detectors 426 of the lidar device 410 illustrated and described with reference to Figure 4B), an optical component (e.g., the optical component 504 shown and described with reference to Figures 5A and 5B), one or more light sources 602 (e.g., arranged into an array of light sources), and one or more detectors 604.

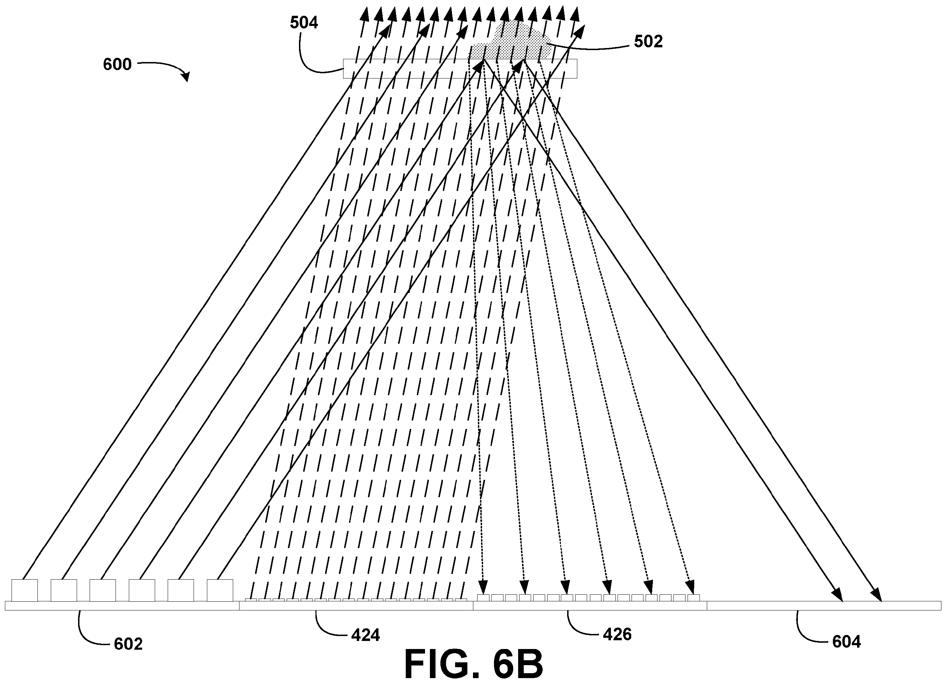

The light emitters 424 / the light detectors 426 may be used by the lidar device 600 to detect the surrounding environment (e.g., similar to the light emitters 424 / light detectors 426 shown and described with reference to Figure 4B). As illustrated by the dashed lines in Figure 6A, the light emitters 424 may emit one or more light signals that are transmitted through the optical component 504 (e.g., if the optical component 504 is an optical window, a lens, and/or a waveguide) or reflected from the optical component 504 (e.g., if the optical component 504 is a mirror) and transmitted into the surrounding environment. The light signals may be reflected by objects in the surrounding environment and directed to the light detectors 426 (e.g., again through the optical component 504) in order to provide information about the surrounding environment (e.g., distance to objects in the surrounding environment based on time of flight). As illustrated in Figure 6B, though, when a defect 502 is present (e.g., the defect 502 and shown and described with reference to Figure 5A), the defect 502 may interfere with the light signals intended for the surrounding environment (e.g., may redirect and/or scatter the light signals). This can result in detection events being missed or mistakenly altered (e.g., resulting in capturing inaccurate data relating to the surrounding environment).

The light emitters 424 / light detectors 426 may be positioned, sized, and/or oriented in a certain way in order to accommodate the light source(s) 602 and/or the detector(s) 604. For example, the light emitters 424 and light detectors 426 may be arranged along a focal plane (e.g., based on the focal length of one or more lenses in the lidar device 600) with enough room adjacent to the light emitters 424 / light detectors 426 within the lidar device 600 to accommodate the light source(s) 602 and/or the detector(s) 604 (e.g., so the light source(s) 602 and/or detector(s) 604 can also be positioned along the focal plane of the lidar device 600). In various embodiments, the light emitters 424 / light detectors 426 may be parallel to one another and/or to the light source(s) 602 / detector(s) 604, as illustrated in Figure 6A. In other embodiments, the light emitters 424 / light detectors 426 may be angled relative to (e.g., perpendicular with) one another and/or to the light source(s) 602 / detector(s) 604.

The optical component 504 may be part of a transmit path and/or receive path of the lidar device 600. For example, the optical component 504 may include an optical window through which light signals are transmitted to the surrounding environment or received from the surrounding environment. Additionally or alternatively, the optical component 504 may include a lens, mirror, etc. The optical component 504 may be used to direct and/or alter light signals used for sensing the surrounding environment.

The defect-detection components of the lidar device 600 (e.g., the light source(s) 602 and/or the detector(s) 604) may be used to identify one or more defects present within or on (e.g., on an exterior of) the optical component 504. For example, as illustrated by the solid lines in Figure 6A, the light source(s) 602 may emit one or more light signals. If one or more defects are present, such light signals may be redirected by the defect(s) (e.g., reflected from the defect(s)) to the detector(s) 604 and detected by the detector(s) 604. For instance, as illustrated in Figure 6A, when no defects are present, the defect-detection signals from the light source(s) 602 may propagate out of the lidar device 600 and/or be directed to portions of the lidar device 600 other than the detector(s) 604. However, as illustrated in Figure 6B, when a defect 502 (e.g., a defect as shown and described with reference to Figure 5A) is present, the defect 502 may reflect or otherwise redirect defect-detection signals from the light source(s) 602 to the detector(s) 604. Hence, detection events corresponding to the detector(s) 604 may be used to determine whether one or more defects are present within or on the optical component 504.

The light source(s) 602 may include one or more LEDs, one or more laser diodes, one or more fluorescent bulbs, etc. Further, as illustrated, the light source(s) 602 may be arranged in an array. It is understood, though, that in other embodiments only a signal light source 602 may be present in the lidar device 600. In embodiments having multiple light sources 602 (e.g., embodiments similar to Figures 6A and 6B), the light sources 602 could each be the same light source or different light sources. For example, two or more of the light sources 602 could have different illumination powers / intensities, different illumination wavelengths, different illumination polarizations, different focal lengths, different emission angles, etc. Further, in some embodiments, one or more of the light source(s) 602 may be adjustable. For example, one or more of the light source(s) 602 may be articulated using a motor and/or mechanical stage in order to change the position and/or orientation (e.g., and consequently emission direction) of the respective light source 602. For example, one or more of the light source(s) 602 may be articulated in order to scan different portions of the optical component 504 for defects over time. Additionally or alternatively, one or more of the light source(s) 602 may include one or more filters that could be interchanged (e.g., by a technician or mechanically using an actuator controlled by a controller) in order to provide different emission characteristics. For example, one or more of the light source(s) 602 could include a white LED with a baseline emission intensity and a mix of different polarizations. A chromatic filter could be swapped in to modify the output wavelength of that light source 602, a neutral-density filter could be swapped in to modify emission intensity of that light source 602, or a polarization filter could be swapped in to modify the emitted polarization of that light source 602. Further, in some embodiments, multiple filters could be used simultaneously (e.g., cascaded) to modify the defect-detection signals output by the light source(s) 602 in a variety of ways.

In some embodiments, the light source(s) 602 may be positioned at a focal plane of the light emitter 424 / light detector 426 detection system. Further, a focal length associated with the light source(s) 602 (e.g., as defined by one or more lenses associated with the light source(s) 602) may correspond to the distance between the light sources(s) 602 and the optical component 504 in order to enhance detection of defects 502. Likewise, a focal length associated with the detector(s) 604 (e.g., as defined by one or more lenses associated with the detector(s) 604) may correspond to the distance between the detector(s) 604 and the optical component 504 in order to enhance detection of defects 502. In addition, while the light source(s) 602 may be positioned at the focal plane of the sensing device (e.g., the focal plane corresponding to the light emitter 424 / light detector 426 detection system, as illustrated in Figures 6A and 6B), it is understood that this need not be the case in all embodiments.

As described above, the detector(s) 604 may be used to detect defect-detection signals emitted from the light source(s) 602 upon those signals being redirected / reflected from one or more defects 502 in order to determine whether one or more defects 502 are present. In some embodiments, the detector(s) 604 may include a CCD or other singular image sensor. Alternatively, in some embodiments, the detector(s) 604 may include one or more light-detecting elements (e.g., APDs, SPADs, SiPMs, photodiodes, and/or photoresistors). Further, in some embodiments, the detector(s) 604 may be arranged into an array. For example, the detectors 604 may include an array of light-detecting elements, where the number of light-detecting elements in the array corresponds to the number of light sources 602 within a corresponding array of light sources 602 (i.e., there may be a one-to-one correspondence between detectors 604 in a detector array and light sources 602 in a light source array). Further, the position / orientation of the detectors 604 in the detector array may be based on (e.g., designed to correspond to) the emission vectors corresponding to the light sources 602 in the light source array such that defect-detection signals reflected from one or more defects 502 are detectable by the detector(s) 604.

Figure 6B illustrates the lidar device 600 of Figure 6A. However, unlike the illustration of Figure 6A, in Figure 6B, there may be a defect present (e.g., similar to the defect 502 shown and described with reference to Figure 5A). As illustrated, the defect 502 may reflect light signals transmitted by the light emitters 424 that were intended to probe the surrounding environment and redirect the light signals to the light detectors 426. As also illustrated, the redirected light signals may be diffuse or otherwise dispersed after interacting with the defect 502. As shown in Figure 6B, the defect-detection light signals emitted by the light source(s) 602 may interact with the defect 502 (e.g., be reflected by the defect 502) and directed to the detector 604.

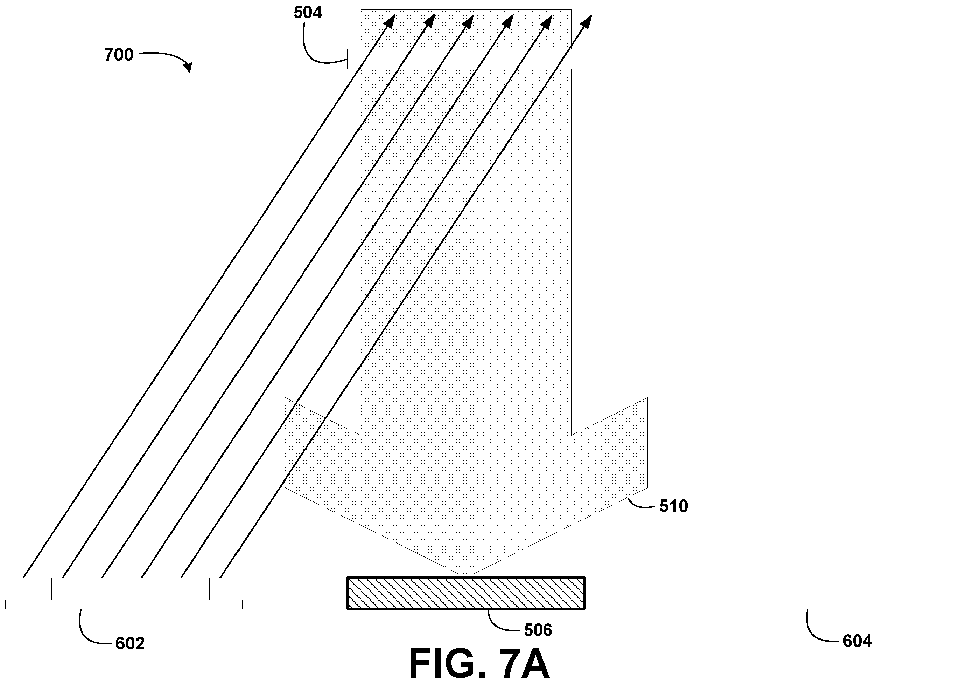

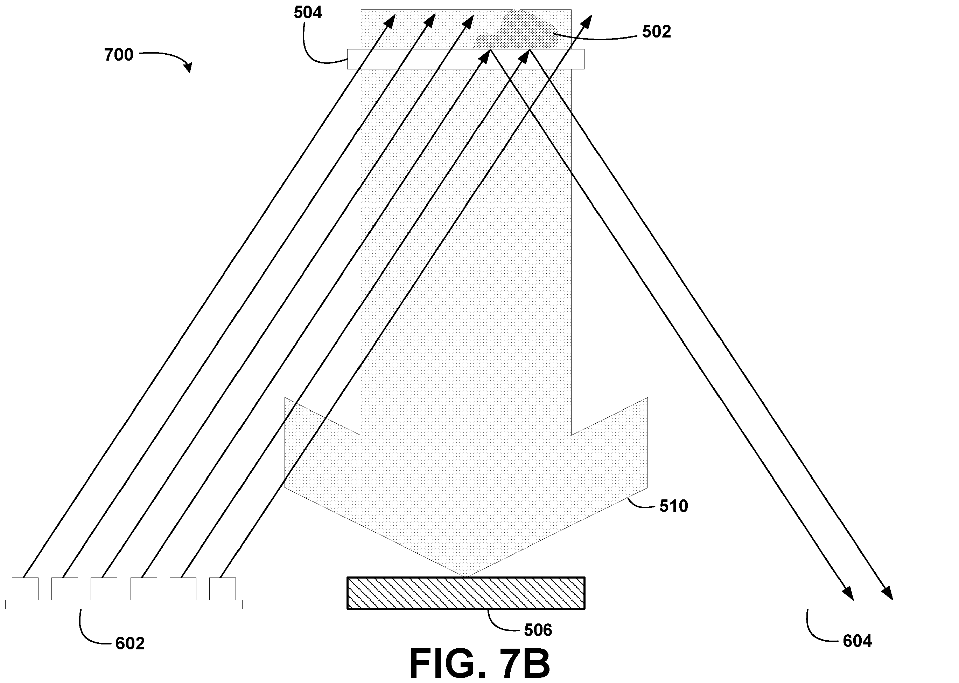

Figures 7A and 7B illustrate a camera 700, according to example embodiments. Like the lidar device 600 illustrated in Figures 6A and 6B, the camera 700 may include a sensing device configured to detect objects in a surrounding environment via the optical component. However, unlike the lidar device 600 of Figures 6A and 6B, the sensing device of the camera 700 may be an image sensor (e.g., the image sensor 506 shown and described with reference to Figure 5B). As illustrated, the image sensor 506 may be configured to capture images of the surrounding environment via an optical path (e.g., the optical path shown and described with reference to Figure 5B) through an optical component (e.g., the optical component 504 shown and described with reference to Figure 5B). Like the lidar device 600 of Figures 6A and 6B, the camera 700 may include one or more light sources 602 and one or more detectors 604 used to detect the presence (e.g., and location) of one or more defects 502. For example, as illustrated in Figure 7B (e.g., and similar to the arrangement of Figure 6B), the light source(s) 602 may emit defect-detection signals that are reflected / redirected from defect(s) 502 and detected by the detector(s) 604 in order to determine whether any defect(s) 502 are present within or on the optical component 504.

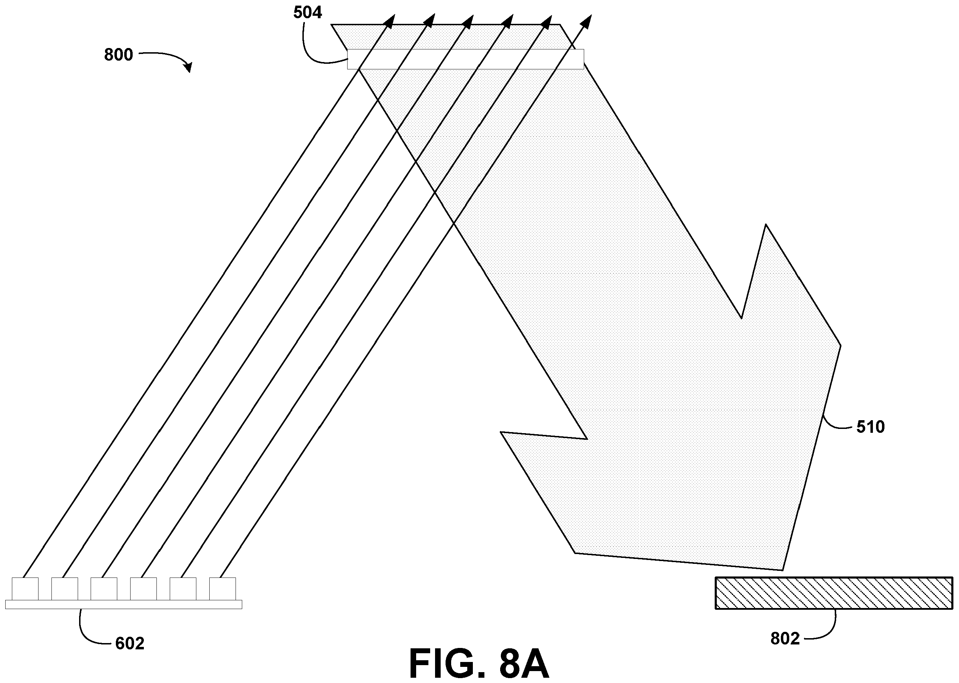

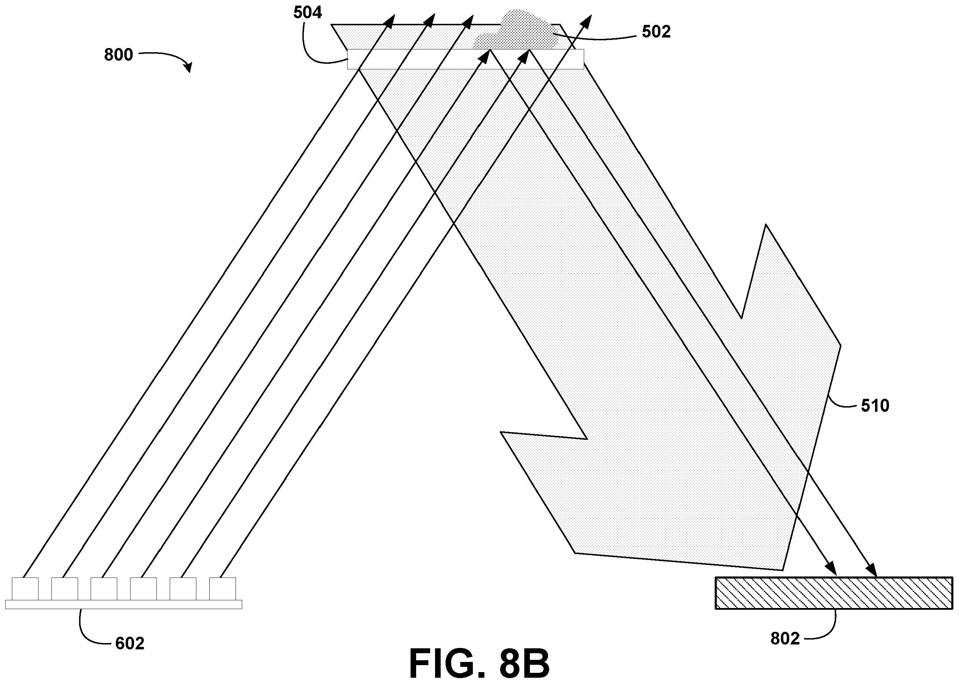

As described above with reference to Figures 6A-7B, in some embodiments, systems (e.g., the lidar device 600 or the camera 700) may include dedicated defect-detection systems (e.g., that include one or more light sources 602 and one or more detectors 604). However, it is understood that other embodiments are also possible. For example, as illustrated in Figures 8A and 8B, some embodiments may include a hybrid system 800. The hybrid system 800 illustrated in Figures 8A and 8B includes light source(s) 602 configured to emit defect-detection signals that can be redirected / reflected from defects 502 within or on the optical component 504 (e.g., as illustrated in Figure 8B). However, unlike Figures 6A-7B, the reflected / redirected defect-detection signal(s) may not be detected by a dedicated defect-detection detector. Instead, the hybrid system 800 may include a hybrid image sensor 802 used to detect the reflected / redirected defect-detection signal(s).

As illustrated in Figure 8B, the hybrid image sensor 802 may be configured to detect both the reflected defect-detection signal(s) and capture images of the surrounding environment via an optical path (e.g., the optical path 510 shown and described with reference to Figure 5B) through the optical component 504. The hybrid image sensor 802 may be the same type of image sensor as illustrated in Figures 7A and 7B. For example, the hybrid image sensor 802 may include a CCD. In some embodiments, the hybrid image sensor 802 may include one or more integrated optical components (e.g., lenses, and/or mirrors) configured to direct, focus, or otherwise alter light. For example, the hybrid image sensor 802 may include integrated optical components configured to direct light from the surrounding environment to different regions of the hybrid image sensor 802 than reflected / redirected defect-detection signals. In some embodiments, images used for defect detection may be captured intermittently by the hybrid image sensor 802 with images captured to detect objects in the surrounding environment via the optical path 510. For example, a sequence of images may be captured by the hybrid image sensor 802, where the sequence of images includes images where the one or more light sources 602 are illuminating the optical component 504 using defect-detection signals followed by images where the one or more light sources 602 refrain from illuminating the optical component 504.

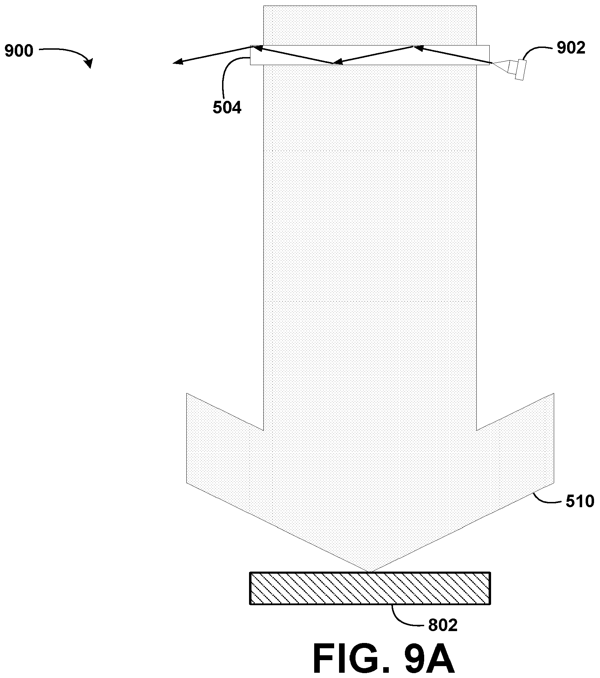

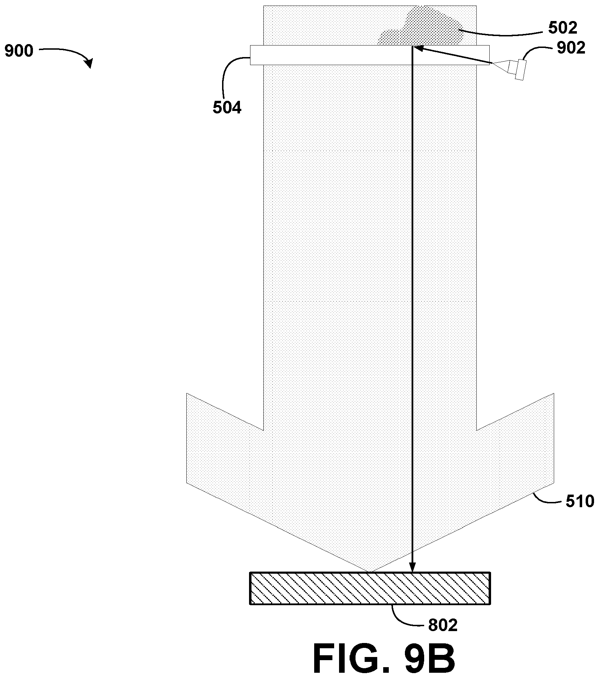

Further, as described above, the one or more light sources of the defect-detection system (e.g., the light sources 602 illustrated in Figures 6A-8B) may be positioned at a focal plane of the sensing device (e.g., the light emitters 424 / light detectors 426 combination of Figures 6A and 6B, the image sensor 506 of Figures 7A and 7B, or the hybrid image sensor 802 of Figures 8A and 8B). However, it is understood that this need not be the case. For example, in various embodiments the one or more light sources 602 may be positioned closer to or farther away from the optical component 504 than the sensing device(s). In still other embodiments, though, the one or more light sources may illuminate the optical component 504 in an entirely different fashion than is illustrated in Figures 6A-8B. For example, Figures 9A and 9B illustrate an embodiment of a camera 900 having light source(s) 602 configured to illuminate the optical component using total internal reflection (i.e., by propagating the defect-detection signal at such an angle within the optical component 504 such that the defect-detection signal is internally reflected from the interior surfaces of the optical component 504). Further, as illustrated in Figures 9A and 9B, the one or more light sources 902 may be arranged (e.g., in a row and/or in an array) adjacent to an edge of the optical component 504 such that the defect-detection signal(s) may be edge-coupled into the optical component 504.

As illustrated in Figure 9A, when no defect 502 is present, the defect-detection signal may propagate from one end of the optical component 504 to the opposite end via total internal reflection (e.g., and exit the optical component 504). In some embodiments, an additional detector (e.g., an additional defect detector) may be positioned at the opposite end of the optical component 504 from the light source 902. If the additional defect detector detects a defect-detection signal emitted from the light source 902, it may be determined that no defect is present within or on the optical window 504. Additionally or alternatively, the additional defect detector may also determine if a defect is present through analysis of the relative signal strength reported by the additional defect detector. For example, if the additional defect detector detects a signal with an intensity that is non-zero, but nevertheless below an anticipated intensity (e.g., based on the intensity of the defect-detection signal emitted by the one or more light sources 902 and/or based on the intensity of a prior detection by the additional defect detector, such as during a calibration measurement, where no defects were present), it may be determined that a defect is present within or on the optical window 504.

If, however, a defect is present within or on the optical window 504 (e.g., as is illustrated in Figure 9B), one or more of the defect-detection signals from the one or more light sources 902 may be redirected / reflected from the defect 502. The redirected / reflected defect-detection signals may then be transmitted out of the optical component 504 and toward the hybrid image sensor 802. For example, as illustrated by the solid line in Figure 9B, one or more defect-detection signals may reflect from the defect 502 (e.g., along the optical path 510) and be detected by the hybrid image sensor 802. As described above with respect to Figures 8A and 8B, the hybrid image sensor 802 may detect a single image that includes both the defect-detection signal(s) and light from the surrounding environment. Additionally or alternatively, in some embodiments, multiple images may be captured (e.g., some with the light source(s) 902 illuminating the optical component 504 using one or more defect-detection signals and some with the light source(s) 902 refraining from illuminating the optical component 504 using defect-detection signals). While Figures 9A and 9B illustrate a camera 900 that includes a hybrid image sensor 802, it is understood that other embodiments that use defect-detection signals propagated using total internal reflection are also possible and are contemplated herein. For example, the lidar device 600 of Figures 6A and 6B could have the light source(s) 602 replaced with the light source(s) 902 illustrated in Figures 9A and 9B. Likewise, the camera 700 of Figures 7A and 7B could have the light source(s) 602 replaced with the light source(s) 902 illustrated in Figures 9A and 9B.

As described above, it can be a challenge to disambiguate a background signal (e.g., a signal corresponding to the surrounding scene) from a defect-detection signal. For example, when an image is captured using the hybrid image sensor 802 of the hybrid system 800 of Figures 8A and 8B, it can be difficult to determine which parts of the image (if any) are influenced by the presence of one or more defects. Hence, techniques described herein may provide for the temporal modulation of the one or more light sources 602 in order to assist in disambiguating between the background signal (e.g., used for object detection and avoidance) and the defect-detection signal (e.g., used for determining whether one or more defect is present within or on the optical component 504).

One technique for temporal modulation includes illuminating the optical component using the one or more light sources 602 according to one or more structured illumination patterns. In some embodiments, this may include illuminating half of the optical component 504 using one or more light sources 602 for a first duration during a first time period and then illuminating the other half of the optical component 504 using one or more light sources 602 for a second duration during a second time period. For example, there may be two light sources 602, one that illuminates the left half of the optical component 504 during the first time period and one that illuminates the right half of the optical component 504 during the second time period. By comparing detection events (e.g., images captured using the hybrid image sensor 802 or, in the case of the lidar systems illustrated in Figures 6A-7B, light detected by the detector(s) 604) during the first and second time periods to detections of the surrounding environment at times when the light source(s) are not illuminating the surrounding environment, the background signal (e.g., representing objects in the surrounding environment) can be readily disambiguated from the defect signal (e.g., indicating the presence, and possibly location, of one or more defects within or on the optical component 504). For example, in an embodiment where only the left half of the optical component 504 is illuminated during the first time period and only the right half of the optical component 504 is illuminated during the second time period, when determining whether a defect is present on the left half of the optical component 504, a computing device may compare an image captured by the hybrid image sensor 802 during the first time period to an image captured by the hybrid image sensor 802 during a time period when no portions of the optical component 504 were illuminated. Additionally or alternatively, images captured (or, in the case of the lidar systems illustrated in Figures 6A-7B, light detected by the detector(s) 604) during the first time period and the second time period may be compared to one another in order to determine the presence and/or location of one or more defects.

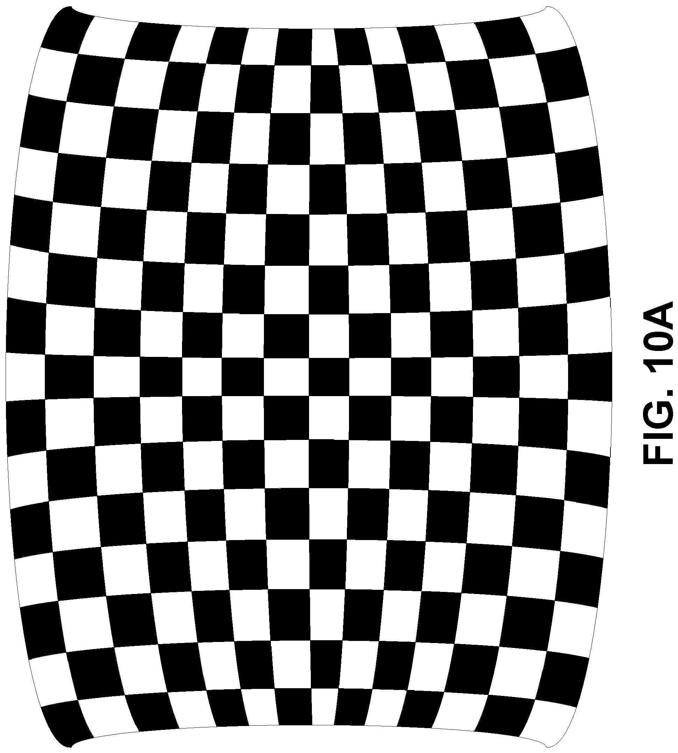

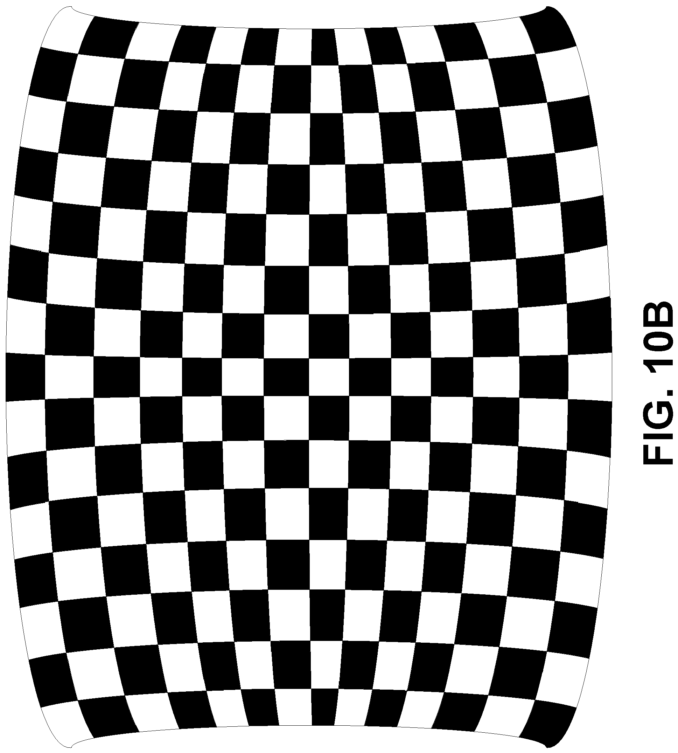

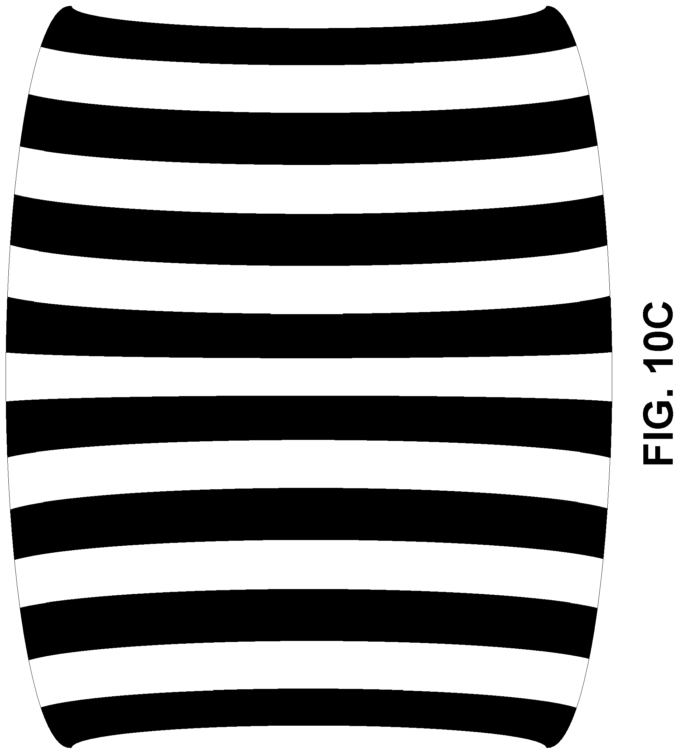

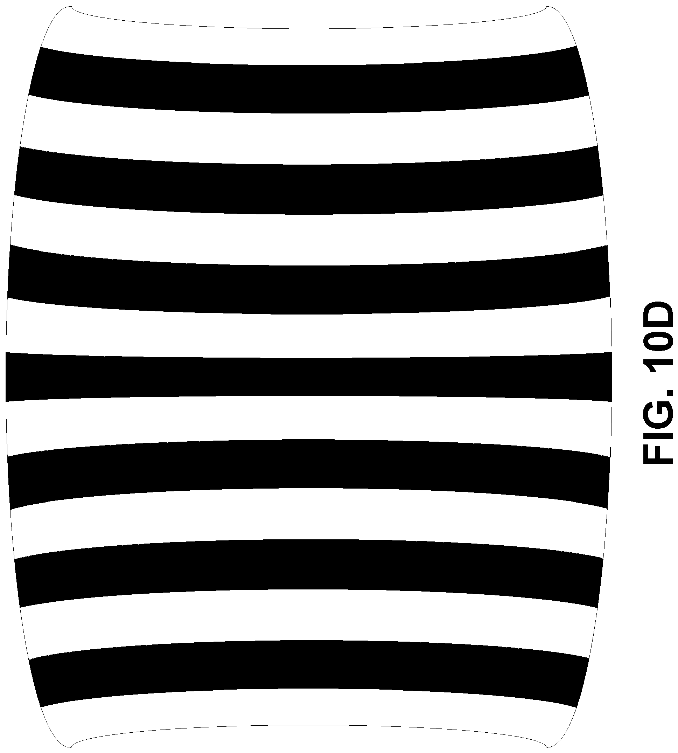

In various embodiments, the structured illumination pattern(s) generated on the optical component 504 by the one or more light sources 602 may vary. In some embodiments, for example, the light sources 602 may simply alternate between two structured illumination patterns on the optical component 504. For instance, as illustrated in Figures 10A and 10B, the structured illumination patterns (e.g., where the optical component 504 corresponds to a curved lens or a curved exterior optical window) may be alternating checkerboard patterns (e.g., where the white regions represent regions of illumination and the black regions represent regions where no illumination occurs). In some cases, there may be a single light source within the light sources 602 that corresponds to each square in the checkerboard pattern and can therefore be turned on or off to illuminate or refrain from illuminating, respectively, the respective square on the optical component 504. Alternatively, a tunable mask may be placed on a single light source or array of light sources and used to selectively illuminate various portions of the optical component 504. Also, instead of a checkerboard pattern, two alternating striped patterns could instead be used for structured illumination patterns (e.g., as illustrated in Figures 10C and 10D). Such striped patterns may be used when the optical component 504 is a curved lens or exterior optical window and/or the light sources 602 may be edge-coupled light sources that propagate defect-signals through the optical component 504 via total internal reflection (e.g., similar to Figures 9A and 9B), for example.

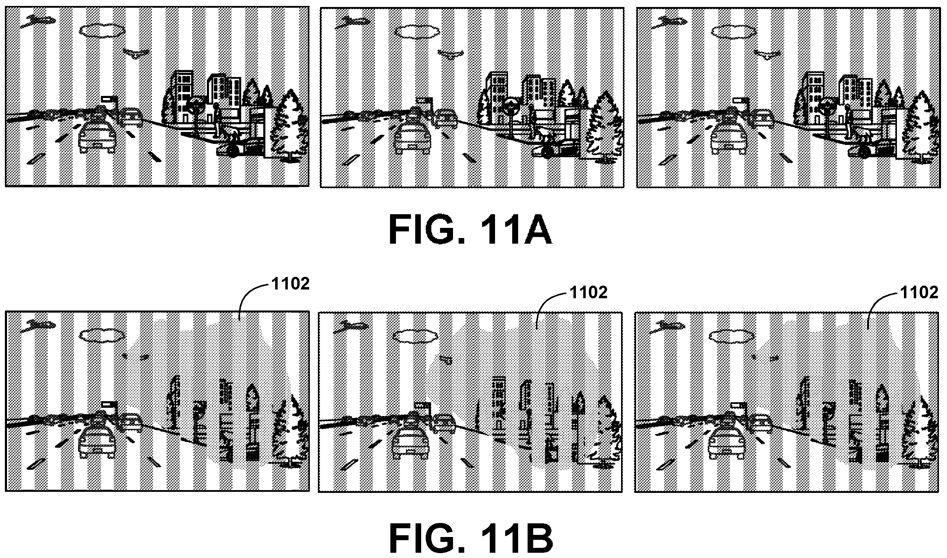

Figures 11A and 11B illustrate a series of images (i.e., image streams) captured using the hybrid image sensor 802 when the optical component 504 is being sequentially illuminated according to the alternating striped patterns of Figures 10C and 10D, for example. The darker striped regions of the images in Figures 11A and 11B represent portions of the optical component 504 (e.g., an optical window through which the hybrid image sensor 802 captures images of the surrounding environment) that are not presently illuminated by the one or more light sources 602, whereas the other striped regions of the images in Figures 11A and 11B represent portions of the optical component 504 that are presently illuminated by the one or more light sources 602. It is understood that Figures 11A and 11B are provided for illustrative purposes only and that images captured using the techniques described herein may not actually physically include light and dark regions. Rather, the light and dark regions of Figures 11A and 11B are merely used to assist in illustrating the illumination patterns used. In Figure 11A, there is no defect present within or on the optical component 504. Hence, the various portions of the images appear the same, regardless of which illumination pattern is currently being employed. Thus, by comparing different regions of the scene at different times, a computing device may determine that no defects are present. However, in Figure 11B, a defect is present within or on the optical component 504. This defect may cause a defect artifact 1102 in the captured images. The defect artifact 1102 may be a blur, for example. As illustrated in Figure 11B, the defect artifact 1102 may be present in the regions presently illuminated by the one or more light sources 602 (e.g., in striped regions that are illuminated within a given illumination pattern). Hence, by comparing the striped regions presently illuminated among the various images (or by comparing the striped regions presently illuminated within the images to images previously captured without any illumination of the optical component 504 being employed), the presence and/or location of the defect may be identified. Such a technique may be particularly helpful in identifying defects when the background signal (e.g., surrounding environment) is changing over time (e.g., as a result of the relative motion of a vehicle operating in an autonomous or semi-autonomous mode on which the detection system is located). For example, because the structured illumination patterns remain consistent while the background signal is changing, the series of captured images (or, in the case of the lidar systems illustrated in Figures 6A-7B, light detected by the detector(s) 604) can be particularly useful in detecting defects because the presence and/or location of the defects will not change over time (or will change over a much larger timescale than the background signal).

It is understood that, in various embodiments, various numbers and/or types of patterns may be used. For example, in some embodiments, there may be an illumination sequence of more than two illumination patterns (e.g., three, four, five, six, seven, eight, nine, and/or ten). For instance, multiple patterns that consist of different subsets of the regions of the checkerboard illustrated in Figures 10A and 10B may be illuminated sequentially. Such additional patterns may be used to assist in determining the location of one or more defects on the optical component 504. Further, in some embodiments, there may be different numbers or orientations of the squares of the checkerboard pattern illustrated in Figures 10A and 10B, different numbers or orientations of the stripes of the striped pattern illustrated in Figures 10C and 10D, different shapes entirely (e.g., a triangular pattern, a pentagonal pattern, and/or a hexagonal pattern), etc.

In addition to or instead of using structural illumination patterns to assist in disambiguating the background signal from the defect signal, a temporal modulation of illumination wavelength may be used. For example, the one or more light sources(s) 602 may illuminate a portion of (e.g., all of) the optical component 504 using a defect-detection signal at a first wavelength (e.g., within a first band / range of wavelengths, such as within a 5 nm range of wavelengths) for a first time period. The first wavelength may be a wavelength that is unlikely to be (e.g., not at all) present in the surrounding environment. This can further assist in disambiguating between the background signal and the defect-detection signal. After illuminating the portion of (e.g., all of) the optical component 504 using the first wavelength, the one or more light sources 602 may: (i) illuminate the same portion of (e.g., all of) the optical component 504 using a defect-detection signal at a second wavelength (e.g., within a second band / range of wavelengths, such as within a 5 nm range of wavelengths, that does not overlap with or at least partially overlaps with the first band of wavelengths); (ii) illuminate the same portion of (e.g., all of) the optical component 504 using white light (e.g., light across a broad range of wavelengths); or (iii) refrain from illuminating the portion of (e.g., all of) the optical component 504 whatsoever.

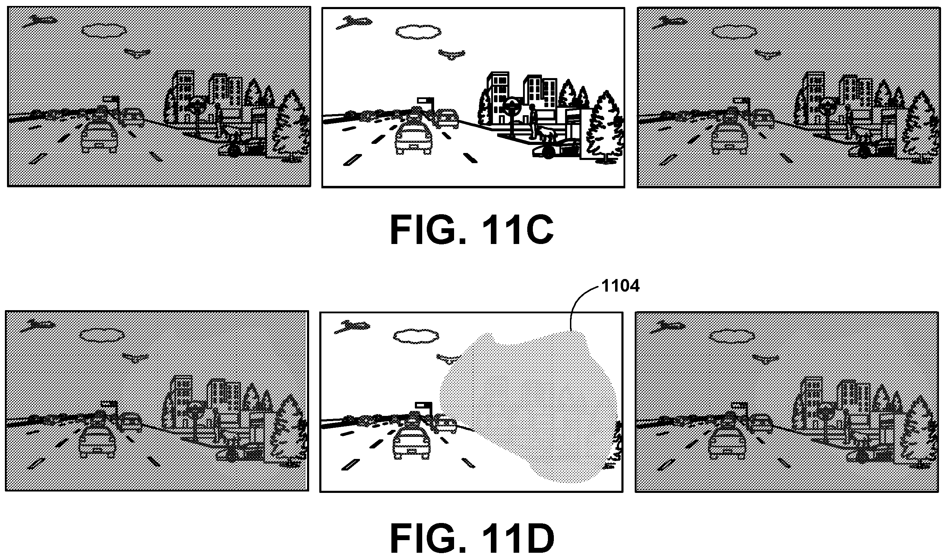

Figures 11C and 11D illustrate a series of images (i.e., an image stream) captured (e.g., by the hybrid image sensor 802 of Figures 8A and 8B) while a temporal modulation of illumination wavelength was employed (e.g., by the one or more light sources 602). For example, the one or more light sources 602 may have been powered off during the first and third captured image in each series and may have been powered on / illuminating the optical component 504 using a first wavelength during the second captured image in each series. As with Figures 11A and 11B, it is understood that Figures 11C and 11D are provided for illustrative purposes only and that images captured using the techniques described herein may not actually appear light and dark. Rather, the light and dark of Figures 11C and 11C is merely used to assist in illustrating when illumination of the optical component 504 is and is not present. In the series of images of Figure 11C, no defect was present within or on the optical component 504. However, in Figure 11D, a defect was present within or on the optical component 504, which gave rise to the defect artifact 1104 present in the series of images and most prominent in the second image. Like the images of Figure 11B, by comparing the images of Figure 11D to one another, the presence and/or location of the defect within or on the optical component 504 can be readily identified.

In addition to or instead of selecting an illumination wavelength for the one or more light sources 602 based on a wavelength that is unlikely to be (e.g., not at all) present in the surrounding environment, the illumination wavelength may be selected to detect a specific type of defect. For example, an illumination wavelength within the green part of the visible spectrum may be selected in order to assist in detecting a green leaf. Other wavelengths for other types of defects are also possible and are contemplated herein. Further, in some embodiments, a series of illuminations at different wavelengths may be used to identify various types of defects. For example, a red wavelength followed by a blue wavelength followed by a green wavelength may be used to illuminate the optical component 504. Then, based on the relative intensities within the captured images corresponding to the defect(s), a coloration and/or reflectivity of the defect(s) may be determined. For instance, if the intensity of the defect artifact in the captured image corresponding to the blue illumination is strong and the intensities of the defect artifacts in the other two captured images are relatively weak, the defect may be determined to be blue. Similarly, if the intensities of the defect artifacts are moderately strong in the captured images corresponding to the green and red illuminations, but the intensity of the defect artifact is relatively weak in the captured image corresponding to the blue illumination, the defect may be determined to be yellow. Other combinations are also possible and are contemplated herein. The identified coloration may be used to determine a type of defect, for example.

As described herein, both spectral (e.g., wavelength) and spatial (e.g., structured illumination) forms of temporal modulation may be performed to assist in identifying a defect in relation to the background signal. Regardless of which type of modulation is used (or if both are used), a modulation frequency may be employed. For example, the one or more light sources 602 used to illuminate the optical component 504 may intermittently illuminate the optical component 504 according to a modulation frequency (e.g., 1 Hz, 2 Hz, 3 Hz, 4 Hz, 5 Hz, 10 Hz, 20 Hz, 30 Hz, 40 Hz, and/or 50 Hz). Such a modulation frequency may be achieved by powering on and off the light sources 602 (e.g., using a controller) at a given rate. Further, the modulation frequency used may be static or may be variable (e.g., controlled by a controller). For example, the modulation frequency may be adjusted (e.g., by a controller) based on the timescale over which the background signal is changing (e.g., based on a velocity of the vehicle on which the detection system is located). Modulating the one or more light sources 602 according to a modulation frequency provides an additional or alternative way to separate defect-detection signals from the background signal. For example, if the one or more light sources 602 were modulated at a relatively low frequency when illuminating the optical component 504, a filter (e.g., a low-pass filter) could be applied to an image stream (e.g., video) captured by the hybrid image sensor 802 in order to retrieve only the defect-detection signals from the image stream.

Additionally, in some embodiments, multiple modulation frequencies may be used. For example, when employing structural illuminations (e.g., as illustrated in Figures 10A-10D), different regions of the optical component 504 may be intermittently illuminated according to different modulation frequencies. For example, a first stripe of a striped pattern may be illuminated periodically according to a first modulation frequency while a second stripe of the striped pattern may be illuminated periodically according to a second modulation frequency. Likewise, when employing time-varying spectral illuminations, different illumination wavelengths could intermittently illuminate the optical component 504 according to different modulation frequencies. For example, a first wavelength (e.g., from a first light source) may illuminate a portion of (e.g., all of) the optical component 504 periodically according to a first modulation frequency while a second wavelength (e.g., from a second light source) may illuminate a portion of (e.g., all of) the optical component 504 periodically according to a second modulation frequency. Still further, in some embodiments, both time-varying structural illumination and time-varying spectral illumination could be employed together. In such embodiments, different modulation frequencies could be used for these different illumination schemes. Regardless of how they are employed, different modulation frequencies may allow for further separation of defect-detection signals (e.g., which can be used in order to determine defect location, defect type, etc.).

Upon disambiguating the defect-detection signal from the background signal, or in the process of disambiguating the defect-detection signal from the background signal, one or more machine-learned models may be employed to determine whether a defect is present, the location of a defect, and/or the type of the defect. For example, a classifier trained on labeled training data that corresponds to certain types of defects, certain locations of defects on an optical component 504, and/or presence / absence of defects may be used. Additionally or alternatively, upon determining that one or more defects are present within or on the optical component 504, one or more remedial actions may be undertaken (e.g., cleaning the optical component at issue, replacing the optical component at issue, decommissioning all or part of the optical component at issue, flagging the data captured via the optical component by sensors as containing the influence of the defect, performing post-processing on the data captured via the optical component by sensors in order to compensate for the influence of the defect). In some embodiments, the type of remedial action which is undertaken may be determined based on determined location(s) of the one or more defects and/or based on determined defect type(s) of the one or more defects.

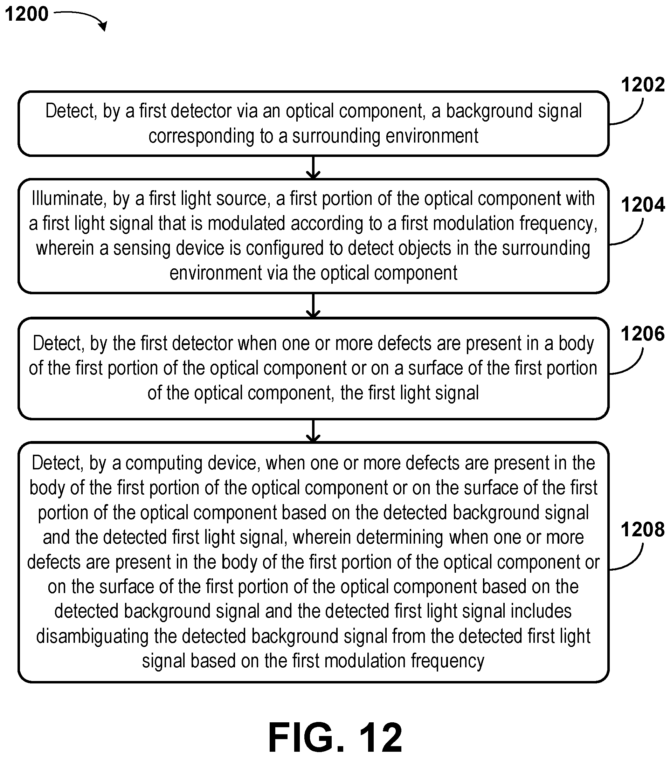

Figure 12 is a flowchart diagram of a method 1200, according to example embodiments. In some embodiments, the method 1200 may be performed to detect defects within a lidar device or a camera. In some embodiments, the method 1200 may be performed by a system (e.g., the lidar device 600 illustrated in Figures 6A and 6B, the camera 700 illustrated in Figures 7A and 7B, the hybrid system 800 illustrated in Figures 8A and 8B, and/or the camera 900 illustrated in Figures 9A and 9B).

At block 1202, the method 1200 may include detecting, by a first detector via an optical component, a background signal corresponding to a surrounding environment.

At block 1204, the method 1200 may include illuminating, by a first light source, a first portion of the optical component with a first light signal that is modulated according to a first modulation frequency. A sensing device may be configured to detect objects in the surrounding environment via the optical component.

At block 1206, the method 1200 may include detecting, by the first detector when one or more defects are present in a body of the first portion of the optical component or on a surface of the first portion of the optical component, the first light signal.

At block 1208, the method 1200 may include detecting, by a computing device, when one or more defects are present in the body of the first portion of the optical component or on the surface of the first portion of the optical component based on the detected background signal and the detected first light signal. Determining when one or more defects are present in the body of the first portion of the optical component or on the surface of the first portion of the optical component based on the detected background signal and the detected first light signal may include disambiguating the detected background signal from the detected first light signal based on the first modulation frequency.

In some embodiments of the method 1200, the first light signal may be within a first wavelength range. Determining when one or more defects are present further may include disambiguating the detected background signal from the detected first light signal based on the first wavelength range.

In some embodiments, the method 1200 may include illuminating, by a second light source, a second portion of the optical component with a second light signal that is modulated according to a second modulation frequency. The second modulation frequency may be different from the first modulation frequency. The second light signal may be within a second wavelength range. The second wavelength range may not overlap with the first wavelength range. The method 1200 may also include detecting, by a second light detector when one or more defects are present in a body of the second portion of the optical component or on a surface of the second portion of the optical component, the second light signal. Additionally, the method 1200 may include determining, by the computing device, when one or more defects are present in the body of the second portion of the optical component or on the surface of the second portion of the optical component based on the detected background signal and the detected second light signal. Determining when one or more defects are present in the body of the second portion of the optical component or on the surface of the second portion of the optical component based on the detected background signal and the detected second light signal may include disambiguating the detected background signal from the detected second light signal based on the second modulation frequency and the second wavelength range.

In some embodiments of the method 1200, the first wavelength range may correspond to a first type of defect and the second wavelength range may correspond to a second type of defect.

In some embodiments of the method 1200, the first portion of the optical component and the second portion of the optical component may at least partially overlap.

In some embodiments of the method 1200, the background signal corresponding to the surrounding environment may not include light within the first wavelength range.

In some embodiments of the method 1200, the first portion of the optical component may not occupy an entirety of the optical component.

In some embodiments, the method 1200 may include illuminating, by a second light source, a second portion of the optical component with a second light signal that is modulated according to a second modulation frequency. The second modulation frequency may be different from the first modulation frequency. The second portion of the optical component may not overlap with the first portion of the optical component. The method 1200 may also include detecting, by a second light detector when one or more defects are present in a body of the second portion of the optical component or on a surface of the second portion of the optical component, the second light signal. Additionally, the method 1200 may include determining, by the computing device, when one or more defects are present in the body of the second portion of the optical component or on the surface of the second portion of the optical component based on the detected background signal and the detected second light signal. Determining when one or more defects are present in the body of the second portion of the optical component or on the surface of the second portion of the optical component based on the detected background signal and the detected second light signal may include disambiguating the detected background signal from the detected second light signal based on the second modulation frequency.

In some embodiments of the method 1200, the first portion of the optical component and the second portion of the optical component may form at least part of a striped pattern or a checkerboard pattern across the optical component.

In some embodiments of the method 1200, the first portion of the optical component may be illuminated with the first light source according to a first illumination sequence. In addition, the method 1200 may include illuminating, by a second light source, a second portion of the optical component with a second light signal that is modulated according to the first modulation frequency. The second portion of the optical component may not overlap with the first portion of the optical component. The second portion of the optical component may be illuminated with the second light source according to a second illumination sequence. The second illumination sequence may be different from the first illumination sequence. The method 1200 may also include detecting, by a second light detector when one or more defects are present in a body of the second portion of the optical component or on a surface of the second portion of the optical component, the second light signal. Further, the method 1200 may include determining, by the computing device, when one or more defects are present in the body of the second portion of the optical component or on the surface of the second portion of the optical component based on the detected background signal and the detected second light signal. Determining when one or more defects are present in the body of the second portion of the optical component or on the surface of the second portion of the optical component based on the detected background signal and the detected second light signal may include disambiguating the detected background signal from the detected second light signal based on the first modulation frequency.

In some embodiments of the method 1200, the first detector may not be a part of the sensing device.

In some embodiments of the method 1200, illuminating the first portion of the optical component with the first light signal may include coupling the first light signal into the body of the first portion of the optical component. Illuminating the first portion of the optical component with the first light signal may also include propagating the first light signal through the body of the first portion of the optical component using total internal reflection.

In some embodiments of the method 1200, the first light source may be positioned within a focal plane of the sensing device or the first detector is positioned at the focal plane of the sensing device.

In some embodiments of the method 1200, the sensing device may include an image sensor, and wherein the first detector is at least a portion of the image sensor.

In some embodiments of the method 1200, the detected background signal may correspond to one or more background images captured using the image sensor. The detected first light signal may correspond to one or more defect images captured using the image sensor. Disambiguating the detected background signal from the detected first light signal based on the first modulation frequency may include performing a background subtraction from the one or more defect images using the one or more background images.

In some embodiments of the method 1200, the detected background signal may correspond to one or more background images captured using the image sensor. The detected first light signal may correspond to one or more defect images captured using the image sensor. An image stream may include the one or more background images and the one or more defect images. Disambiguating the detected background signal from the detected first light signal based on the first modulation frequency may include applying a low-pass filter to the image stream.

In some embodiments of the method 1200, the first detector may not be a part of the sensing device.

In some embodiments, the method 1200 may include determining a type of defect of at least one of the one or more defects by applying a machine-learned model to the disambiguated detected first light signal.

In some embodiments of the method 1200, the type of defect may include a scratch, a crack, a smudge, a deformation, an air bubble, an impurity, a degradation, a discoloration, an imperfect transparency, or a warping within the optical component. The type of defect may additionally or alternatively include condensation, dirt, dust, mud, leaves, rain, snow, sleet, hail, ice, or insect residue on the optical component.

In some embodiments, the method 1200 may include, in response to determining when one or more defects are present in the body of the first portion of the optical component or on the surface of the first portion of the optical component, performing one or more remedial actions.

The present disclosure is not to be limited in terms of the particular embodiments described in this application, which are intended as illustrations of various aspects. Many modifications and variations can be made without departing from its spirit and scope, as will be apparent to those skilled in the art. Functionally equivalent methods and apparatuses within the scope of the disclosure, in addition to those enumerated herein, will be apparent to those skilled in the art from the foregoing descriptions. Such modifications and variations are intended to fall within the scope of the appended claims.

The above detailed description describes various features and functions of the disclosed systems, devices, and methods with reference to the accompanying figures. In the figures, similar symbols typically identify similar components, unless context dictates otherwise. The example embodiments described herein and in the figures are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations, all of which are explicitly contemplated herein.

With respect to any or all of the message flow diagrams, scenarios, and flow charts in the figures and as discussed herein, each step, block, operation, and/or communication can represent a processing of information and/or a transmission of information in accordance with example embodiments. Alternative embodiments are included within the scope of these example embodiments. In these alternative embodiments, for example, operations described as steps, blocks, transmissions, communications, requests, responses, and/or messages can be executed out of order from that shown or discussed, including substantially concurrently or in reverse order, depending on the functionality involved. Further, more or fewer blocks and/or operations can be used with any of the message flow diagrams, scenarios, and flow charts discussed herein, and these message flow diagrams, scenarios, and flow charts can be combined with one another, in part or in whole.

A step, block, or operation that represents a processing of information can correspond to circuitry that can be configured to perform the specific logical functions of a herein-described method or technique. Alternatively or additionally, a step or block that represents a processing of information can correspond to a module, a segment, or a portion of program code (including related data). The program code can include one or more instructions executable by a processor for implementing specific logical operations or actions in the method or technique. The program code and/or related data can be stored on any type of computer-readable medium such as a storage device including RAM, a disk drive, a solid state drive, or another storage medium.

Moreover, a step, block, or operation that represents one or more information transmissions can correspond to information transmissions between software and/or hardware modules in the same physical device. However, other information transmissions can be between software modules and/or hardware modules in different physical devices.

The particular arrangements shown in the figures should not be viewed as limiting. It should be understood that other embodiments can include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

The specification includes the following subject-matter expressed in the form of clauses 1-20.
1. A method comprising:
   detecting, by a first detector via an optical component, a background signal corresponding to a surrounding environment;
   illuminating, by a first light source, a first portion of the optical component with a first light signal that is modulated according to a first modulation frequency, wherein a sensing device is configured to detect objects in the surrounding environment via the optical component;
   detecting, by the first detector when one or more defects are present in a body of the first portion of the optical component or on a surface of the first portion of the optical component, the first light signal; and
   determining, by a computing device, when one or more defects are present in the body of the first portion of the optical component or on the surface of the first portion of the optical component based on the detected background signal and the detected first light signal, wherein determining when one or more defects are present in the body of the first portion of the optical component or on the surface of the first portion of the optical component based on the detected background signal and the detected first light signal comprises disambiguating the detected background signal from the detected first light signal based on the first modulation frequency.
2. The method of clause 1, wherein the first light signal is within a first wavelength range, and wherein determining when one or more defects are present further comprises disambiguating the detected background signal from the detected first light signal based on the first wavelength range.
3. The method of clause 2, further comprising:
   illuminating, by a second light source, a second portion of the optical component with a second light signal that is modulated according to a second modulation frequency, wherein the second modulation frequency is different from the first modulation frequency, wherein the second light signal is within a second wavelength range, and wherein the second wavelength range does not overlap with the first wavelength range;
   detecting, by a second light detector when one or more defects are present in a body of the second portion of the optical component or on a surface of the second portion of the optical component, the second light signal; and
   determining, by the computing device, when one or more defects are present in the body of the second portion of the optical component or on the surface of the second portion of the optical component based on the detected background signal and the detected second light signal, wherein determining when one or more defects are present in the body of the second portion of the optical component or on the surface of the second portion of the optical component based on the detected background signal and the detected second light signal comprises disambiguating the detected background signal from the detected second light signal based on the second modulation frequency and the second wavelength range.
4. The method of clause 3, wherein the first wavelength range corresponds to a first type of defect and the second wavelength range corresponds to a second type of defect.
5. The method of clause 3 or 4, wherein the first portion of the optical component and the second portion of the optical component at least partially overlap.
6. The method of any of clauses 2-5, wherein the background signal corresponding to the surrounding environment does not include light within the first wavelength range.
7. The method of clause 1 or 2, wherein the first portion of the optical component does not occupy an entirety of the optical component.
8. The method of clause 7, further comprising:
   illuminating, by a second light source, a second portion of the optical component with a second light signal that is modulated according to a second modulation frequency, wherein the second modulation frequency is different from the first modulation frequency, and wherein the second portion of the optical component does not overlap with the first portion of the optical component;
   detecting, by a second light detector when one or more defects are present in a body of the second portion of the optical component or on a surface of the second portion of the optical component, the second light signal; and
   determining, by the computing device, when one or more defects are present in the body of the second portion of the optical component or on the surface of the second portion of the optical component based on the detected background signal and the detected second light signal, wherein determining when one or more defects are present in the body of the second portion of the optical component or on the surface of the second portion of the optical component based on the detected background signal and the detected second light signal comprises disambiguating the detected background signal from the detected second light signal based on the second modulation frequency.
9. The method of clause 8, wherein the first portion of the optical component and the second portion of the optical component form at least part of a striped pattern or a checkerboard pattern across the optical component.
10. The method of any of clauses 1-9, wherein illuminating the first portion of the optical component with the first light signal comprises:
   coupling the first light signal into the body of the first portion of the optical component; and
   propagating the first light signal through the body of the first portion of the optical component using total internal reflection.
11. The method of any of clauses 1-10, wherein the first light source is positioned within a focal plane of the sensing device or the first detector is positioned at the focal plane of the sensing device.
12. The method of any of clauses 1-11, wherein the sensing device comprises an image sensor, and wherein the first detector is at least a portion of the image sensor.
13. The method of clause 12, wherein the detected background signal corresponds to one or more background images captured using the image sensor, wherein the detected first light signal corresponds to one or more defect images captured using the image sensor, and wherein disambiguating the detected background signal from the detected first light signal based on the first modulation frequency comprises performing a background subtraction from the one or more defect images using the one or more background images.
14. The method of clause 12, wherein the detected background signal corresponds to one or more background images captured using the image sensor, wherein the detected first light signal corresponds to one or more defect images captured using the image sensor, wherein an image stream comprises the one or more background images and the one or more defect images, and wherein disambiguating the detected background signal from the detected first light signal based on the first modulation frequency comprises applying a low-pass filter to the image stream.
15. The method of any of clauses 1-11, wherein the first detector is not a part of the sensing device.
16. The method of any of clauses 1-15, further comprising determining a type of defect of at least one of the one or more defects by applying a machine-learned model to the disambiguated detected first light signal.
17. The method of clause 16, wherein the type of defect comprises:
   a scratch, a crack, a smudge, a deformation, an air bubble, an impurity, a degradation, a discoloration, an imperfect transparency, or a warping within the optical component; or
   condensation, dirt, dust, mud, leaves, rain, snow, sleet, hail, ice, or insect residue on the optical component.
18. The method of any of clauses 1-17, further comprising, in response to determining when one or more defects are present in the body of the first portion of the optical component or on the surface of the first portion of the optical component, performing one or more remedial actions.
19. A system comprising:
   an optical component;
   a sensing device configured to detect objects in a surrounding environment via the optical component;
   a first light source configured to illuminate a first portion of the optical component with a first light signal that is modulated according to a first modulation frequency;
   a first detector configured to:
      detect, via the optical component, a background signal corresponding to the surrounding environment; and
      detect, when one or more defects are present in a body of the first portion of the optical component or on a surface of the first portion of the optical component, the first light signal; and
   a computing device configured to determine when one or more defects are present in the body of the first portion of the optical component or on the surface of the first portion of the optical component based on the detected background signal and the detected first light signal, wherein determining when one or more defects are present in the body of the first portion of the optical component or on the surface of the first portion of the optical component based on the detected background signal and the detected first light signal comprises disambiguating the detected background signal from the detected first light signal based on the first modulation frequency. 20. A computing device configured to determine when one or more defects are present in a body of a first portion of an optical component or on a surface of the first portion of the optical component based on a detected background signal and a detected first light signal, wherein determining when one or more defects are present in the body of the first portion of the optical component or on the surface of the first portion of the optical component based on the detected background signal and the detected first light signal comprises disambiguating the detected background signal from the detected first light signal based on a first modulation frequency,
   wherein the detected background signal corresponds to a surrounding environment and was detected by a first detector via the optical component,
   wherein a sensing device is configured to detect objects in the surrounding environment via the optical component,
   wherein the first portion of the optical component was illuminated by the first light signal by a first light source,
   wherein the first light signal was modulated according to the first modulation frequency, and
   wherein the first light signal was detected by the first detector when one or more defects were present in the body of the first portion of the optical component or on the surface of the first portion of the optical component.

## Claims

1. A method comprising:
detecting, by a first detector via an optical component, a background signal corresponding to a surrounding environment;
illuminating, by a first light source, a first portion of the optical component with a first light signal that is modulated according to a first modulation frequency, wherein a sensing device is configured to detect objects in the surrounding environment via the optical component;
detecting, by the first detector when one or more defects are present in a body of the first portion of the optical component or on a surface of the first portion of the optical component, the first light signal; and
determining, by a computing device, when one or more defects are present in the body of the first portion of the optical component or on the surface of the first portion of the optical component based on the detected background signal and the detected first light signal, wherein determining when one or more defects are present in the body of the first portion of the optical component or on the surface of the first portion of the optical component based on the detected background signal and the detected first light signal comprises disambiguating the detected background signal from the detected first light signal based on the first modulation frequency.

2. The method of claim 1, wherein the first light signal is within a first wavelength range, and wherein determining when one or more defects are present further comprises disambiguating the detected background signal from the detected first light signal based on the first wavelength range.

3. The method of claim 2, further comprising:
illuminating, by a second light source, a second portion of the optical component with a second light signal that is modulated according to a second modulation frequency, wherein the second modulation frequency is different from the first modulation frequency, wherein the second light signal is within a second wavelength range, and wherein the second wavelength range does not overlap with the first wavelength range;
detecting, by a second light detector when one or more defects are present in a body of the second portion of the optical component or on a surface of the second portion of the optical component, the second light signal; and
determining, by the computing device, when one or more defects are present in the body of the second portion of the optical component or on the surface of the second portion of the optical component based on the detected background signal and the detected second light signal, wherein determining when one or more defects are present in the body of the second portion of the optical component or on the surface of the second portion of the optical component based on the detected background signal and the detected second light signal comprises disambiguating the detected background signal from the detected second light signal based on the second modulation frequency and the second wavelength range.

4. The method of claim 3, wherein the first wavelength range corresponds to a first type of defect and the second wavelength range corresponds to a second type of defect; and/or wherein the first portion of the optical component and the second portion of the optical component at least partially overlap.

5. The method of any of claims 2-4, wherein the background signal corresponding to the surrounding environment does not include light within the first wavelength range.

6. The method of claim 1 or 2, wherein the first portion of the optical component does not occupy an entirety of the optical component.

7. The method of claim 6, further comprising:
illuminating, by a second light source, a second portion of the optical component with a second light signal that is modulated according to a second modulation frequency, wherein the second modulation frequency is different from the first modulation frequency, and wherein the second portion of the optical component does not overlap with the first portion of the optical component;
detecting, by a second light detector when one or more defects are present in a body of the second portion of the optical component or on a surface of the second portion of the optical component, the second light signal; and
determining, by the computing device, when one or more defects are present in the body of the second portion of the optical component or on the surface of the second portion of the optical component based on the detected background signal and the detected second light signal, wherein determining when one or more defects are present in the body of the second portion of the optical component or on the surface of the second portion of the optical component based on the detected background signal and the detected second light signal comprises disambiguating the detected background signal from the detected second light signal based on the second modulation frequency.

8. The method of claim 7, wherein the first portion of the optical component and the second portion of the optical component form at least part of a striped pattern or a checkerboard pattern across the optical component.

9. The method of any preceding claim,
wherein illuminating the first portion of the optical component with the first light signal comprises:
coupling the first light signal into the body of the first portion of the optical component; and
propagating the first light signal through the body of the first portion of the optical component using total internal reflection;
and/or wherein the first light source is positioned within a focal plane of the sensing device or the first detector is positioned at the focal plane of the sensing device;
and/or wherein the method further comprises, in response to determining when one or more defects are present in the body of the first portion of the optical component or on the surface of the first portion of the optical component, performing one or more remedial actions;
and/or wherein the first detector is not a part of the sensing device.

10. The method of any of claims 1-8, wherein the sensing device comprises an image sensor, and wherein the first detector is at least a portion of the image sensor.

11. The method of claim 10,
wherein the detected background signal corresponds to one or more background images captured using the image sensor, wherein the detected first light signal corresponds to one or more defect images captured using the image sensor, and wherein disambiguating the detected background signal from the detected first light signal based on the first modulation frequency comprises performing a background subtraction from the one or more defect images using the one or more background images; or
wherein the detected background signal corresponds to one or more background images captured using the image sensor, wherein the detected first light signal corresponds to one or more defect images captured using the image sensor, wherein an image stream comprises the one or more background images and the one or more defect images, and wherein disambiguating the detected background signal from the detected first light signal based on the first modulation frequency comprises applying a low-pass filter to the image stream.

12. The method of any preceding claim, further comprising determining a type of defect of at least one of the one or more defects by applying a machine-learned model to the disambiguated detected first light signal.

13. The method of claim 12, wherein the type of defect comprises:
a scratch, a crack, a smudge, a deformation, an air bubble, an impurity, a degradation, a discoloration, an imperfect transparency, or a warping within the optical component; or
condensation, dirt, dust, mud, leaves, rain, snow, sleet, hail, ice, or insect residue on the optical component.

14. A system comprising:
an optical component;
a sensing device configured to detect objects in a surrounding environment via the optical component;
a first light source configured to illuminate a first portion of the optical component with a first light signal that is modulated according to a first modulation frequency;
a first detector configured to:
detect, via the optical component, a background signal corresponding to the surrounding environment; and
detect, when one or more defects are present in a body of the first portion of the optical component or on a surface of the first portion of the optical component, the first light signal; and
a computing device configured to determine when one or more defects are present in the body of the first portion of the optical component or on the surface of the first portion of the optical component based on the detected background signal and the detected first light signal, wherein determining when one or more defects are present in the body of the first portion of the optical component or on the surface of the first portion of the optical component based on the detected background signal and the detected first light signal comprises disambiguating the detected background signal from the detected first light signal based on the first modulation frequency.

15. A computing device configured to determine when one or more defects are present in a body of a first portion of an optical component or on a surface of the first portion of the optical component based on a detected background signal and a detected first light signal, wherein determining when one or more defects are present in the body of the first portion of the optical component or on the surface of the first portion of the optical component based on the detected background signal and the detected first light signal comprises disambiguating the detected background signal from the detected first light signal based on a first modulation frequency,
wherein the detected background signal corresponds to a surrounding environment and was detected by a first detector via the optical component,
wherein a sensing device is configured to detect objects in the surrounding environment via the optical component,
wherein the first portion of the optical component was illuminated by the first light signal by a first light source,
wherein the first light signal was modulated according to the first modulation frequency,
and
wherein the first light signal was detected by the first detector when one or more defects were present in the body of the first portion of the optical component or on the surface of the first portion of the optical component.
